(19) Europäisches Patentamt
European Patent Office
Office européen des brevets

(11) **EP 2 775 587 B1**

(12) **EUROPÄISCHE PATENTSCHRIFT**

(45) Veröffentlichungstag und Bekanntmachung des Hinweises auf die Patenterteilung:
**28.09.2016 Patentblatt 2016/39**

(51) Int Cl.:
*H02J 7/00* *(2006.01)*  *H02J 7/34* *(2006.01)*
*H04W 52/02* *(2009.01)*

(21) Anmeldenummer: **14157316.2**

(22) Anmeldetag: **28.02.2014**

(54) **Verfahren zum Betreiben eines batteriebetriebenen Geräts und dazu eingerichtete Schaltungsanordnung**

Method for operating a battery-powered device and correspondingly equipped circuit assembly

Procédé de fonctionnement d'un appareil alimenté par batterie et circuit réalisé à cet effet

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2013 DE 102013102195**

(43) Veröffentlichungstag der Anmeldung:
**10.09.2014 Patentblatt 2014/37**

(73) Patentinhaber: **Techem Energy Services GmbH
65760 Eschborn (DE)**

(72) Erfinder: **Matussek, Dirk
60318 Frankfurt am Main (DE)**

(74) Vertreter: **Keil & Schaafhausen
Patent- und Rechtsanwälte PartGmbB
Friedrichstrasse 2-6
60323 Frankfurt am Main (DE)**

(56) Entgegenhaltungen:
WO-A1-2011/131241  DE-A1- 10 323 630
US-A1- 2007 259 629  US-A1- 2008 094 042
US-A1- 2011 204 855

## EP 2 775 587 B1

**Beschreibung**

Die Erfindung betrifft ein Verfahren zum Betreiben eines batteriebetriebenen Geräts bzw. einer Last eines batteriebetriebenen Geräts und eine zur Durchführung des Verfahrens eingerichtet Schaltungsanordnung. In dem Gerät ist einer der Energieversorgung des Geräts bzw. der in dem Gerät betriebenen Last dienenden Batterie ein Stützkondensator parallelgeschaltet. Die Last wird gepulst betrieben, wobei die Last die für den Laststrom während der Lastpulsdauer des Lastpulses benötigte Ladung aus dem Stützkondensator erhält, der sich während des Lastpulses entsprechend dem durch die Last während der Lastpulsdauer benötigten Strom entlädt und in einer sich an den Lastpuls anschließenden Erholphase wieder auflädt.

Vorzugsweise handelt es sich bei der Last um einen Verbraucher, der während der Lastpulsdauer einen so hohen Strombedarf hat, dass dieser Strombedarf durch die Batterie alleine nicht zur Verfügung gestellt werden kann. Ein typischer und erfindungsgemäß bevorzugter Fall betrifft einen als Last betriebenen Sender und/oder Empfänger (d. h. einen Sender, einen Empfänger oder einen Transceiver als kombinierten Sendeempfänger) in einem Teilnehmergerät eines Drahtlos-Kommunikationsnetzwerks für das Aussenden und/ Empfangen von Verbrauchsmesswerten. Das Teilnehmergerät als batteriebetriebenes Gerät kann insbesondere ein Verbrauchserfassungsgerät, das die Verbrauchsdaten ermittelt und in dem Drahtlos-Kommunikationsnetzwerk aussendet oder ein Datensammler sein, der von einem Verbrauchserfassungsgerät erfasste und ausgesendete Verbrauchsdaten über das Drahtlos-Kommunikationsnetzwert empfängt und ggf. zur Weiterleitung wieder aussendet. Die Erfindung betrifft also insbesondere batteriebetriebene elektronische Sensoren mit drahtlosen Kommunikationseinrichtungen. Solche Sensoren werden beispielsweise in Systemen zur Verbrauchserfassung von Wärme, Wasser, Gas oder Strom in Wohn- oder Gewerbegebäuden eingesetzt. Sie kommen beispielsweise auch in Rauch- oder Brandwarnmeldeanlagen zum Einsatz. Als weitere Anwendungen solcher Sensoren sind alle Formen von drahtlosen Sensor- oder Aktuator-Netzwerken zu nennen.

Mit "Batterie" ist erfindungsgemäß grundsätzlich sowohl eine herkömmliche Batterie als auch ein wiederaufladbarer Akkumulator bezeichnet.

Ein besonders bevorzugter Anwendungsfall für die hier beschriebene Erfindung sind aber batteriebetriebene elektronische Sensoren, insbesondere batteriebetriebene Verbrauchserfassungsgeräte für Wärme, Wasser, Gas und Strom, die wartungs- und batteriewechselfreie Betriebsdauern von 12 bis 15 Jahren aufweisen müssen. Diese werden in der Regel mit Lithium-Langzeitbatterien erreicht, die sich durch eine geringe Selbstentladung in der Größenordnung von nur 1% pro Jahr auszeichnen. Bei einer typischen Batterie-Nennkapazität von beispielsweise 1000mAh stehen dem Sensor also während der Lebensdauer der Batterie ca. 850mAh Ladung zur Verfügung. Dies entspricht einer durchschnittlichen Batteriestromentnahme von ca. 6,5$\mu$A pro Stunde bei einer Betriebsdauer von 15 Jahren.

Um diesen geringen durchschnittlichen Stromverbrauch zu erreichen, sind die elektronischen Sensoren typischerweise mit einem stromsparenden Mikrocomputer als Prozessor ausgestattet, der die allermeiste Zeit nur seine Uhrenfunktion aktiv hält, was bei einem sehr geringen Stromverbrauch unter 1$\mu$A geschieht. Durch die Uhrenfunktion gesteuert, weckt der Mikrocomputer regelmäßig in vorprogrammierten Zeitintervallen die Sensorschaltung des Sensors bzw. allgemeiner des batteriebetriebenen Geräts auf, um anstehende Aktionen auszuführen. Solche Aktionen können beispielsweise das Durchführen einer Temperatur- oder Durchfluss-Messung sein, das Betätigen eines Aktors, das Durchführen einer Rechenoperation oder das Aussenden gespeicherter Messwerte mit einem Funksender. Manche elektronische Sensoren sind auch mit einem Funkempfänger ausgerüstet, der regelmäßig aktiviert wird, um auf ggf. anstehende Kommandos zu hören oder Messwerte benachbarter Sensoren zu empfangen, um diese dann bspw. mit dem Funksender in Richtung eines Datensammlers weiterzuleiten. Die genannten Aktionen dauern jeweils typischerweise 1 bis 20ms und ihr typischer Stromverbrauch liegt zwischen 1 und 30mA. Entsprechend selten werden sie durchgeführt, damit der oben genannte mögliche durchschnittliche Stromverbrauch nicht überschritten wird.

Das zeitliche Stromverbrauchsprofil eines elektronischen Sensors setzt sich also aus langen Phasen sehr geringen Stromverbrauchs und kurzen Pulsen hohen Stromverbrauchs zusammen.

Die typischerweise eingesetzten Lithium-Kohlenstoffmonofluorid-Zellen sind durch ihren hohen Innenwiderstand, der je nach Entladegrad zwischen 50 und 800$\Omega$ liegt, nicht in der Lage, den während der Verbrauchspulse benötigten Strom zu liefern. Über mehrere Sekunden können sie nur Ströme unter 1mA liefern. Andere Batterie-Bauformen, zum Beispiel gewickelte Lithiumzellen, weisen zwar einen geringeren Innenwiderstand auf und können deswegen höhere Ströme liefern, sie haben jedoch bauartbedingt eine höhere Selbstentladung. Deswegen kann mit solchen Batterietypen die genannte Lebensdauer-Anforderung nicht erreicht werden, was sie für die vorbeschriebene Anwendung als Verbrauchserfassungsgeräte ausschließt.

Um trotz des hohen Innenwiderstands die geforderten Lastpulsströme liefern zu können, werden der Batterie häufig Stützkondensatoren parallel geschaltet, die während des Lastpulses die benötigte Ladung liefern und sich danach während einer Erholphase über den Innenwiderstand der Batterie wieder voll aufladen. Ein parallel geschalteter Stützkondensator belastet die Batterie mit einem Leckstrom, der so gering wie möglich gehalten werden muss, weil er permanent fließt. Bei einer erforderlichen Stützkapazität von 1000$\mu$F weisen spezielle Elektrolytkondensatoren einen Leckstrom von deutlich unter 1$\mu$A auf.

Die Dimensionierung des Stützkondensators wird vom Laststrom $I_L$ und der Lastdauer $T_L$ während des Lastpulses bestimmt, sowie von der als Grenzspannung bezeichneten minimalen Spannung $U_{min}$, die bis zum Ende des Lastpulses nicht unterschritten werden darf, damit die Last ordnungsgemäß arbeitet, d.h. also beispielsweise die notwendige Energie für das Senden oder Empfangen von Daten geliefert wird. Dabei ist außerdem zu berücksichtigen, dass die Leerlaufspannung $U_0$ der Batterie im Laufe der Entladung (während der Lebensdauer) in einem typischen Anwendungsfall ca. von $U_0 = 3,4V$ auf $U_0 = 3,0V$ sinkt. Der umfangreichste Lastpuls ist in der Regel das Aussenden von Daten mit dem Funksender. Typische Werte sind hier $I_L = 25mA$ und $T_L = 20ms$.

Wenn die Mindest-Betriebsspannung des Funksenders $U_{min} = 2,5V$ beträgt, darf der Spannungshub $\Delta U_0$ am Stützkondensator 0,5V (= $U_0 - U_{min}$) nicht überschreiten. Es ergibt sich so eine notwendige Stützkapazität C von

$$C = \frac{I_L \cdot T_L}{\Delta U_0} = 1000 \mu F \qquad . \qquad\qquad (1)$$

Bei dieser Abschätzung wird vereinfachend angenommen, dass der Laststrom $I_L$ ausschließlich aus dem Stützkondensator entnommen wird. Da die Batterie wegen ihres hohen Innenwiderstands in erster Näherung keinen nennenswerten Strombeitrag liefert, ist diese Annahme durchaus zulässig. Die Dimensionierung berücksichtigt hier, dass die Leerlaufspannung $U_0$ der Batterie gegen Ende der Entladung auf 3,0V abgesunken ist.

Zu Beginn der Batterieentladung könnten die Lastpulse auch länger sein. Zwischen den Lastpulsen muss eine gewisse auch als Erholzeit bezeichnete Erholphase verstreichen, bis sich der Stützkondensator über den Innenwiderstand der Batterie wieder auf Leerlaufs- bzw. Klemmspannung $U_0$ der Batterie aufgeladen hat. Da der Innenwiderstand mit der Batterieentladung gegen Ende der Batterielebensdauer ansteigt, wird dann eine längere Erholphase benötigt. Praktisch sind Erholphasen mit einer Dauer von 3s bis 5s erforderlich, bis sich der Stützkondensator vollständig wieder aufgeladen hat, wobei der hohe Innenwiderstand der Batterie gegen Ende der Entladung bereits berücksichtigt ist.

Die DE 10 2005 013 638 C5 beschreibt ein Verfahren, bei dem der Funksender eines Verbrauchserfassungssensors aus einer Lithium-Batterie mit hohem Innenwiderstand versorgt wird, zu der ein Stützkondensator wie vorbeschrieben parallel geschaltet ist. Das dort vorgeschlagene Verfahren löst das Problem der beschränkten Ladung in dem Stützkondensator, die für den Lastpuls zur Verfügung steht, dadurch, dass eine größere per Funk zu übertragende Datenmenge in mehrere Funktelegramme aufgeteilt wird, die mit festgelegten zeitlichen Abständen nacheinander ausgesendet werden, um die Rekonstruktion der Daten zu vereinfachen. So wird ein zu großer Lastpuls, der den Stützkondensator zu sehr entladen würde und damit die Betriebsspannung der Sensorschaltung inklusive Sender unter die Grenzspannung fallen lassen würde, vermieden durch eine Aufteilung der Last auf mehrere kürzere Lastpulse, die von Erholphasen in der Größenordnung einiger Sekunden unterbrochen sind.

Die US 2007/0259629 A1 beschreibt Drahtlos-Kommunikationstechnik mit niedrigem Energieverbrauch, bei dem ein Stützkondensator vorgesehen ist, der die für das Senden und Empfangen von Funktelegrammen benötigte Energie in Ergänzung zu einer vorhandenen Batterie zur Verfügung stellt. Es ist vorgesehen, dass der Stützkondensator durch eine Steuerung mit der Batterie verbunden wird, um diesen zu laden, wenn kein Sende- oder Empfangsbetrieb erfolgt, oder im Lastfall mit der Last verbunden wird.

Aus der US2006/0264188 A1 ist eine Energieversorgung für ein GPRS-Modul eines Mobiltelefons bekannt. Für Phasen einer hohen Last ist der Last ein Superkondensator parallel geschaltet, der soviel Strom während der Phasen hoher Last zur Verfügung stellt, dass eine vorgegebene Betriebsspannung aufrecht erhalten werden kann. In den zwischen den Lastspitzen liegenden Phasen wird der Superkondensator geladen. In ähnlicher Weise beschreibt die US 6,882,130 B2 einen sog. "Step-up"-Betriebsmodus, in dem eine nicht ausreichende Batteriespannung unter Zuschaltung eines Kondensators nach oben konvertiert wird.

In der DE 10 2010 022 774 A1 wird das Problem zu großer Lastpulse durch das bedarfsweise Hinzuschalten einer zweiten Batterie mit kleinerer Kapazität, jedoch auch mit kleinerem Innenwiderstand gelöst. Hierdurch wird dem Umstand Rechnung getragen, dass in der Regel der größte Teil der in der Lebensdauer des Sensors benötigten Batterieladung während der Grundbelastung im µA-Bereich verbraucht wird und die Ladung aller Lastpulse einen deutlich geringeren Anteil des Ladungsbudgets beansprucht. Diese beiden Ladungsanteile werden sinnvoll auf jeweils getrennt optimierte Batterien verteilt.

In bestimmten Ausführungsformen der hier betrachteten Sensornetzwerke verfügen die Sensoren neben Funksendern auch über Funkempfänger, können also bidirektional über Funk kommunizieren. In einer weiter spezialisierten Ausführungsform wird diese bidirektionale Kommunikationsfähigkeit von den Sensoren dafür verwendet, Daten benachbarter Sensoren zu empfangen und zusätzlich zu den eigenen Daten in Richtung auf einen zentralen Datensammler oder ein Gateway zu einem Weitverkehrsnetzwerk weiter zu senden ("Relaying"). Solche Netzwerke aus batteriebetriebenen Sensoren arbeiten in der Regel in einem bestimmten synchronen Zeitschema, damit für jeden der Sensoren klar ist, wann er Daten senden muss und wann er für einen sendenden Kommunikationspartner-Sensor auf Empfang gehen muss. Dies wird in der Regel durch ein dediziertes, prädizierbares Zeitschlitzschema erreicht. Ein Dauerempfang schließt sich hier allein schon wegen der Anforderung des langjährigen Batteriebetriebs aus. Ein solches synchrones Funknetz mit batteriebetriebenen Teilnehmern ist beispielsweise in der DE 199 11 657 C2 beschrieben.

Bei der Inbetriebnahme des Funknetzes oder einzelner Teilnehmer in dem Funknetz müssen sich die Teilnehmer eines solchen synchronen Sensornetzwerks synchronisieren. Dies geschieht typischerweise üblicherweise durch das Aussenden von Bakensignalen über einen gewissen Zeitraum des Dauerempfangs (in Größenordnung einigen Minuten bis hin zu einigen -zig Minuten). Der Dauerempfang wird benötigt, um das Bakensignal eines künftigen Kommunikationspartners zeitlich aufzufinden und diesem ggf. Zeitinformationen über zukünftige Kommunikations-Zeitschlitze oder Kommunikations-Zeitpunkte zu entnehmen. Sind die teilnehmenden Sensoren Massenprodukte, die mit aus den eingangs beschriebenen Lithiumzellen versorgt werden, ist ein solcher minutenlanger Dauerempfang nicht möglich.

Im oben genannten Dimensionierungsbeispiel würde ein Sensor seinen Funkempfänger mit einem Stromverbrauch von 20mA für nur 25ms einschalten können, damit die Spannung am Stützkondensator nicht unter die Grenzspannung $U_{min}$ fällt. Danach müsste eine Erholphase von 5s für die vollständige Wiederaufladung des Stützkondensators vorgesehen werden, bevor der Empfänger erneut eingeschaltet werden kann. Die Dauer von 5s für die Erholphase ist nötig, damit der Stützkondensator auch gegen Ende der Batterieentladung (Lebensdauer) über den dann hohen Innenwiderstand vollständig geladen wird.

Es ergibt sich in diesem Beispiel ein Tastverhältnis η des Empfängers von empfangendem Ein-Zustand zu nicht-empfangendem Aus-Zustand von $η = {}^1/_{200}$.

Dies ist weit von dem eigentlich gewünschten Dauerempfang entfernt. Somit verlängert sich die Synchronisationsdauer bis zum hinreichend wahrscheinlichen Empfang der Bakensignale benachbarter Sensoren in diesem "gepulsten" Dauerempfang (d.h. aufeinander folgenden Empfangspulsen) gegenüber dem gewünschten ununterbrochenen Dauerempfang um den Faktor 200 in die Größenordnung Stunden bis Tage.

Das in der EP 1 860 830 B1 beschriebene Inbetriebnahmeverfahren für ein Sensornetzwerk löst das vorerwähnte Problem der sehr langen Synchronisierung dadurch, dass einem neu in ein Sensornetzwerk einzubindenden Sensor Synchron-Informationen aus bereits in Betrieb befindlichen Sensorknoten mit Hilfe eines mobilen Installationsgerätes übermittelt werden. So wird die Notwendigkeit des Dauerempfangs bzw. möglichst schnell aufeinander folgender Empfangspulse vermieden.

Ein wesentlicher Nachteil dieser Lösung ist, dass eine inbetriebnehmende Person (Monteur, Servicetechniker) zur Inbetriebnahmezeit vor Ort sein muss, um das mobile Installationsgerät zu bedienen. Hierdurch wird eine zeitliche Verbindung von Montage und Inbetriebnahme erzwungen. In der Praxis kommt es jedoch häufig vor, dass an einem Montagetermin nur Teile des auszustattenden Gebäudekomplexes zugänglich sind. So kann es beispielsweise sein, dass zunächst nur zwei Gebäudeteile mit Sensoren ausgestattet werden können, zwischen denen keine direkte Funkverbindung möglich ist, während ein dazwischenliegender Gebäudeteil aus organisatorischen Gründen zunächst unzugänglich bleibt. In diesem Fall kann zwar mit dem mobilen Installationsgerät die Synchronisationsinformation der Sensoren des einen Gebäudeteils zu denen des anderen, entfernten Gebäudeteils gebracht werden, aber wegen der fehlenden Funkverbindungen kann diese im laufenden Betrieb nicht aufrecht erhalten, also laufend aktualisiert (nachsynchronisiert) werden. Die Synchronisationsinformationen der Sensoren der beiden Gebäudeteile "veralten" also im Lauf der weiteren Zeit bspw. durch sich aufakkumulierende Uhrentoleranzen und/oder unterschiedliche Temperaturen. Wenn dann zu einem späteren Zeitpunkt der mittlere Gebäudeteil zugänglich wird, kann die Installation und Inbetriebnahme der dort vorgesehenen Sensoren nachgeholt werden. Die Übermittlung der Synchroninformationen von bzw. an die Sensoren der beiden zuerst aus- gestatteten Gebäudeteile mit dem mobilen Installationsgerät ist jetzt allerdings abhängig von der Möglichkeit des Zugangs zu diesen Gebäudeteilen. Diese kann wiederum durch organisatorische Gegebenheiten verwehrt sein.

Ein weiterer Nachteil des beschriebenen Inbetriebnahmeverfahrens ist, dass es zur Re-Synchronisation von Sensorknoten, die während des laufenden Netzwerkbetriebs die Synchronisation zu ihren Nachbarknoten verloren haben, nicht geeignet ist. Dies wäre mit dem im Stand der Technik beschriebenen Verfahren nur möglich, wenn in diesem Fall eine Person mit dem mobilen Installationsgerät zum betroffenen Sensorknoten ginge und diesem die Synchronisationsinformationen erneut übermitteln würde. Ein solches Vorgehen verbietet sich jedoch aus Wirtschaftlichkeitsgründen, da es mit einem hohen organisatorischen und personellen Aufwand, weiteren Anfahrten, etc. verbunden ist.

Zusammenfassend ist also die Notwendigkeit der Anwesenheit eines externen Synchronisations-Hilfsgeräts inklusive Bedienperson nachteilig, teuer und oft unpraktikabel.

Andererseits haben die im Stand der Technik vorgesehenen Verfahren zur Abpufferung von Lastpulsen an Langzeitbatterien mit hohem Innenwiderstand mit Hilfe eines parallel geschalteten Stützkondensators die Eigenschaft, dass nach einem kurzen Lastpuls eine verhältnismäßig lange Erholzeit erforderlich ist. Dies wird dadurch verstärkt, dass die mit der Batterieentladung (Batterielebensdauer) sinkende Leerlaufspannung und der mit der Batterieentladung (Batterielebensdauer) steigende Innenwiderstand bei der Dimensionierung berücksichtigt werden, um die volle Lebensdauer der Batterie auszunutzen. Dies führt in Betriebsphasen des Sensors, in denen eine hohe Aktivität nötig ist, wie zum Beispiel bei einem Dauerempfang in der Synchronisationsphase eines synchronen Sensornetzwerks, zu erheblichen betrieblichen Nachteilen. So kann es mehrere Tage dauern, bis ein synchrones Netzwerk batteriebetriebener Sensoren die Betriebsbereitschaft erlangt hat. Gegebenenfalls notwendige Nachbesserungen bei der Sensorausstattung können so erst nach Tagen durchgeführt werden, was eine erneute, kostspielige Anfahrt des Installationspersonals erfordert.

Durch Störungen im laufenden Funkbetrieb des Sensornetzwerks kann es außerdem zu einem Synchronitätsverlust einzelner teilnehmender Sensoren, beispielweise durch einen zeitweise von anderen Funkanwendungen belegten Funkkanal, führen. Diese Sensoren liefern dann solange keine Daten mehr, bis sie durch eine ggf. automatische Re-Synchronisierung wieder ins Netzwerk eingebunden sind. Diese erfordert wieder Phasen erhöhter Empfangsbereitschaft (Dauerempfang), die sich durch die zwischendurch immer wieder notwendigen Stützkondensator-Erholphasen wiederum über mehrere Tage hinziehen können.

Die Verwendung einer zweiten Hochstrom-Batterie zur Stromversorgung während der Lastpulse, so wie sie in DE 10 2010 022 774 A1 vorgeschlagen wird, verbietet sich insbesondere bei Netzwerken von Verbrauchserfassungsgeräten, beispielsweise Heizkostenverteilern, Wärme- oder Wasserzählern und Datensammlern, aus Kostengründen.

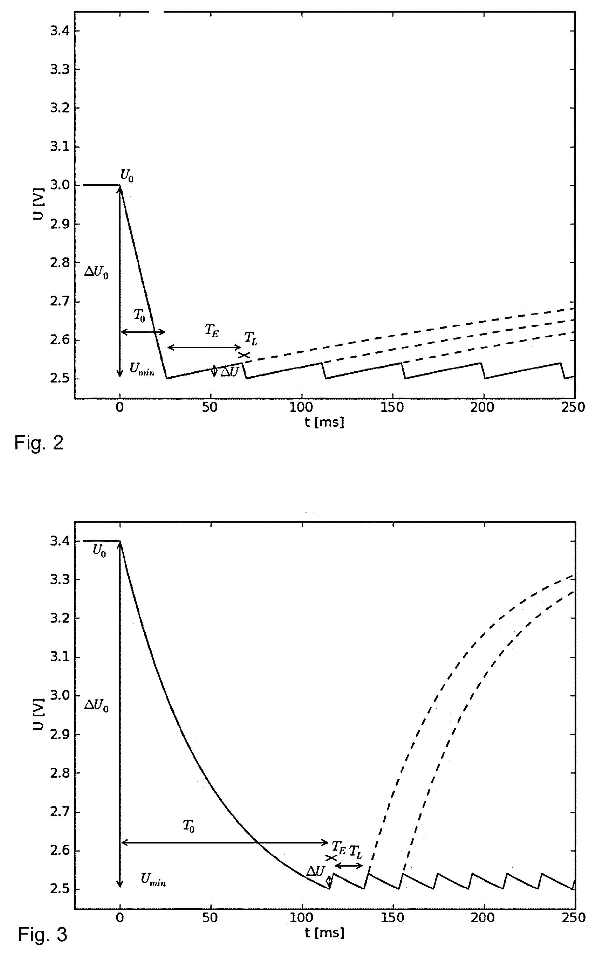

Die US 2011/204855 A1 offenbart einen Regelschaltkreis zum Laden eines Stützkondensators in einem batteriebetriebenen Gerät, der in einem geladenen Zustand einer angeschlossenen Last für eine kurze Zeit einen hohen Strom zur Verfügung stellen kann, ohne die Spannung der Batterie unter einen unteren Schwellenwert zu ziehen. Hierzu wird ein Ladeverfahren vorgeschlagen, bei dem die Batterie über einen Regelschaltkreis beginnt, einen leeren Kondensator aufzuladen, bis die Batteriespannung auf einen vorgegebenen Grenzwert sinkt, während der Ladestrom des Kondensators stark ansteigt. Abschließend wird die Batteriespannung konstant gehalten und der Kondensator bei maximalem Ladestrom geladen, bis der Kondensator die Spannung der Batterie erreicht. Anschließend werden die Batterie und der Kondensator an dem Regelkreis vorbei kurzgeschlossen, und die Spannung von Batterie und Kondensator steigen langsam an (vgl. Absatz [0027]), bis der Strom in den Kondensator auf Null absinkt (vgl. Absatz [0030]) und der Kondensator vollständig geladen ist (vgl. auch Fig. 3 zum Zeitpunkt $T_4$, zu dem die Batteriespannung und die Kondensatorspannung nahezu der Leerlaufspannung der Batterie zum Zeitpunkt $T_1$ entsprechen). Wenn der Kondensator entsprechend geladen ist, wird die Last für eine kurze Zeit eingeschaltet, bis die Spannung an dem Kondensator auf einen bestimmten Wert sinkt. Danach lädt der Kondensator wieder.

In der WO 2011/131241 A1 wird ein batteriebetriebenes Hörgerät beschrieben, bei dem ein Kondensator parallel zu einem Empfänger geschaltet ist, um den Empfänger während des Hörens mit Strom zu versorgen und der in Empfangspausen des Empfängers geladen wird. Um den Stromfluss zu dem Empfänger und dem Kondensator zu steuern und Stromänderungen zu vermeiden, die ein hörbares Rauschen verursachen, ist eine Stromregeleinrichtung vorgesehen. Der Empfänger kann in einem getakteten Modus betrieben werden, um Energie zu sparen. Der Kondensator dient dazu, Stromspitzen im Strombedarf des Empfängers abzufangen, wobei die Stromregeleinrichtung einen Dauerstrom zur Verfügung stellt, der den mittleren Strombedarf bereits abdeckt. Der Strombedarf hängt maßgeblich den Empfangsbedingungen ab. Diesem Strombedarf passt sich die Stromregeleinrichtung, wie in Fig. 13 gezeigt, mit langsamen Änderungen an, wobei die Versorgungsspannung bei erhöhtem Strombedarf sinkt.

Aufgabe der vorliegenden Erfindung ist es daher, eine Möglichkeit vorzuschlagen, einen im Vergleich zum Stand der Technik verbesserten angenäherten Dauerbetrieb einer Last in einem batteriebetriebenen Gerät vorzuschlagen, wobei der angenäherte Dauerbetrieb länger sein soll als die maximale Lastpulsdauer, die durch die in dem vollständig geladenen Stützkondensator und den Laststrom vorgegeben ist.

Diese Aufgabe wird erfindungsgemäß mit dem Verfahren nach Anspruch 1 und einer zur Durchführung des Verfahrens eingerichteten Schaltungsanordnung nach Anspruch 4 gelöst. Bei einem der Verfahren der eingangs genannten Art ist dazu insbesondere vorgesehen, dass die Erholphase beendet wird, bevor der Stützkondensator aufgeladen ist. Für die Praxis und die Erfindung bedeutet eine volle oder vollständige Aufladung insbesondere das Durchlaufen des Spannungshubs $\Delta U$ von mindestens 99,9% des Spannungshubs $\Delta U_0 = U_0 - U_{min}$ am Kondensator. Eine alternative Definition für das vollständige Aufladen des Kondensators kann auch sein, dass der Spannungshub $\Delta U = U - U_{min}$ mindestens 99,9% des Spannungshubs $\Delta U$ aus der vorangegangenen Erholphase E erreicht. Der Fachmann kann auch weitere geeignete Definitionen wählen. Hintergrund der Definition einer vollständigen Aufladung ist, dass eine weitere Aufladung des Kondensators bezogen auf Energieverbrauch in dem Lastfall keine bzw. keine nennenswerte weitere Energie zur Verfügung stellt. Erfindungsgemäß folgt auf die erste Erholphase mindestens ein weiterer Lastpuls, durch den die erste Erholphase beendet wird, bevor der Stützkondensator vollständig aufgeladen ist. Erfindungsgemäß kann auf einen weiteren Lastpuls jeweils eine weitere Erholphase folgen, die beendet wird, bevor der Stützkondensator vollständig aufgeladen ist.

Dieser Vorgang wird erfindungsgemäß für eine bestimmte Anzahl von Zyklen aus Lastpuls und Erholphase fortgeführt, maximal bis die Batterie verbraucht (d.h. entladen) ist oder bis durch das batteriebetriebene Gerät eine Betriebspause im Betreiben der Last mit Lastpulsen gemacht wird, insbesondere indem die Erholphase nicht abgebrochen und der Stützkondensator vollständig geladen wird.

Während der Betriebspause der Last, in dem bevorzugten Anwendungsfall also eine Sende- und Empfangspause des Geräts, bleibt der Stützkondensator vorzugsweise auch im geladenen Zustand mit der Batterie verbunden, so dass der Stützkondensator ständig nachgeladen wird und der Leckstrom des Stützkondensators kompensiert wird.

So ist der Stützkondensator vor dem nächsten Lastpuls vollständig geladen. Der Stützkondensator-Typ muss so ausgewählt werden, dass nur ein geringer Leckstrom fließt, der die Batterie kaum belastendet, so dass eine Batterielebensdauer von mehr als 15 Jahren, vorzugsweise mehr als 20 oder 25 Jahren möglich ist.

Die vorliegende Erfindung löst die genannte Aufgabe also dadurch, dass die Belastung der Parallelschaltung von Batterie, insbesondere Lithium-Langzeitbatterie, und Stützkondensator zeitlich so gesteuert wird, dass die Wiederaufladung des Stützkondensators in den Lastpausen möglichst schnell geschieht. Dadurch wird die Stromentnahme einer Folge von Pulslasten aus der Batterie mit Stützkondensator so optimiert, dass ein möglich großes Tastverhältnis η von "Ein"-Zeit zu "Aus"-Zeit der Last erreicht wird erreicht wird. Dadurch kann für eine besonders bevorzugte Anwendung in drahtlosen Sensornetzen eine möglichst kurze Dauer für eine Synchronisierung erzielt werden, weil der Empfang während der Synchronisierung einem Dauerempfang angenähert wird. Darüber wird natürlich jeder andere Anwendungsfall, in dem eine zeitlich möglichst dichte Folge von Lastpulsen erforderlich oder wünschenswert ist, ermöglicht bzw. optimiert.

Dies wird nachfolgend an dem konkreten Beispiel des Funkempfängers eines Sensors während einer Synchronisierung erläutert, ohne dass die beschriebenen Funktionalitäten und Merkmale auf diesen Anwendungsfall beschränkt sind.

Wenn der Funkempfänger des Sensors während einer Synchronisierung oder Re-Synchronisierung des Sensornetzwerks bei der Suche nach Bakensignalen möglichst dauerhaft auf Empfang sein soll, wird er erfindungsgemäß zunächst in einer Grund-Lastphase so lange eingeschaltet, bis die Spannung U am Stützkondensator die Grenzspannung oder minimale Spannung $U_{min}$ erreicht hat. Es wird hierbei also der volle Spannungshub $\Delta U_0$ von der Batterie-Leerlaufspannung $U_0$ bis zur Grenzspannung $U_{min}$ durchlaufen ($\Delta U_0 = U_0 - U_{min}$). Dies dauert die Zeit $T_0$.

Anschließend wird der Empfänger ausgeschaltet und der Stützkondensator mit der Kapazität C lädt sich über den Innenwiderstand $R_i$ der Batterie wieder auf. Der Spannungsverlauf am Stützkondensator folgt in dieser Erholphase einer Exponentialfunktion:

$$U(t) = U_{min} + \Delta U_0 \cdot (1 - e^{-t/R_i \cdot C}) , \qquad (2)$$

wobei zu Beginn der Erholphase die Zeit t = 0 ist.

Entsprechend dem exponentiellen Verlauf ist der Spannungsanstieg zu Beginn der Erhol- bzw. Ladephase des Stützkondensators am stärksten und wird im Verlauf der Ladekurve immer geringer. Aufgrund des exponentiellen Verlaufs, bei dem sich die Spannung unendlich an einen Endwert annähert, ohne diesen jemals zu erreichen, ist eine vollständige Aufladung des Stützkondensators praktisch und im Sinne der vorliegenden Erfindung dann erreicht, wenn der durch eine weitere Aufladung erreichte Spannungszuwachs im Vergleich zu dem Abfall der Spannung während des Lastfalls vernachlässigbar klein ist. Dann stellt eine weitere Aufladung des Kondensators bezogen auf Energieverbrauch in dem Lastfall keine bzw. keine nennenswerte weitere Energie zur Verfügung. Ein typischer Grenzwert ist das Durchlaufen des maximalen Spannungshubs $\Delta U_0$ zu etwa 99,9%, der in der Praxis als vollständiges Aufladen des Stützkondensators angesehen werden kann.

Um die schnelle Kondensatorladung zu Beginn der Erholphase auszunutzen, wird die Erholphase deshalb erfindungsgemäß schon nach einer kurzen Zeit abgebrochen bzw. beendet, und zwar bevor der Stützkondensator vollständig geladen ist. Das Beenden der Erholphase kann erfolgen, wenn ein Teil $\Delta U$, beispielsweise 8%, des vollen Spannungshubs $\Delta U_0$, durchlaufen ist. Dies sei nach einer Erholphase der Dauer $T_E$ der Fall.

Jetzt wird der Empfänger in einer erneuten Lastphase bspw. solange eingeschaltet, bis erneut die Grenzspannung $U_{min}$ am Stützkondensator anliegt. Diese sei nach der Lastdauer $T_L$ erreicht. Diese abwechselnde Folge (Zyklus) von Erholphase und Lastphase wird solange wiederholt, wie es für den Betrieb des Funkempfängers während der (Re-)Synchronisierungsphase des Sensornetzwerks, oder allgemeiner für den gewünschten Lastfall, erforderlich ist.

Für die Dauer $T_0$ der initialen Grund-Lastphase, in der sich der vollständig geladene Stützkondensator bis zur Grenzspannung $U_{min}$ entlädt, gilt

$$T_0 = -R_i \cdot C \cdot \ln\left(1 - \frac{\Delta U_0}{R_i \cdot I_L}\right) \qquad (3)$$

mit $R_i$ als dem Innenwiderstand der Batterie, C als der Kapazität des Stützkondensators, $\Delta U_0$ als dem vollen Spannungshub und $I_L$ als dem Laststrom, in dem Beispiel also dem Strom zum Betrieb des Funkempfängers.

Für die Dauer $T_E$ der Erholphase gilt

$$T_E = -R_i \cdot C \cdot \ln\left(1 - \frac{\Delta U}{\Delta U_0}\right) \qquad (4)$$

mit $\Delta U$ als dem Teil des vollen Spannungshubs, der während der Erholphase durchlaufen wird, d.h. $\Delta U = U(T_E) - U_{min}$.

Für die Dauer $T_L$ der Lastphase gilt

$$T_L = -R_i \cdot C \cdot \ln\left(1 + \frac{\Delta U}{\Delta U_0 - \Delta U - R_i \cdot I_L}\right) \qquad (5)$$

Das als Verhältnis der Dauer der Lastphase zu der Dauer der Erholphase definierte Tastverhältnis $\eta$ ergibt sich demnach zu

$$\eta = \frac{T_L}{T_E} = \frac{\ln\left(1 + \dfrac{\Delta U}{\Delta U_0 - \Delta U - R_i \cdot I_L}\right)}{\ln\left(1 - \dfrac{\Delta U}{\Delta U_0}\right)} \; . \qquad (6)$$

Das Tastverhältnis $\eta$ wird maximal, wenn $\Delta U$ gegen 0 geht. Für die praktische Anwendung beim Betrieb eines Funkempfängers muss für die Dauer $T_L$ der Lastphase mindestens 1 bis 2ms vorgesehen werden. Trotzdem ist der Grenzwert des Tastverhältnisses $\eta$, das theoretische Optimum, von Interesse. Es ergibt sich zu

$$\eta_{max} = \lim_{\Delta U \to 0} \eta(\Delta U) = \frac{1}{\dfrac{R_i \cdot I_L}{\Delta U_0} - 1} \; . \qquad (7)$$

Das theoretische Minimum hat das Tastverhältnis $\eta$, wenn $\Delta U$ gegen $\Delta U_0$ geht:

$$\eta_{min} = \lim_{\Delta U \to \Delta U_0} \eta(\Delta U) = 0 \; . \qquad (8)$$

Dies entspricht theoretisch einer unendlich langen Erholzeit $T_E$. In der praktischen Anwendung ist ein Stützkondensator von 1000μF bei einem Innenwiderstand der Batterie von 500 Ω nach 3,5s wieder voll aufgeladen, d.h. er hat dann 99,9% des Spannungshubs $\Delta U_0$ durchlaufen (Berechnung: $T_{99,9\%}$ = - $R_i$ C ln(0,001)).
Bei der Nutzung des jeweils vollen Spannungshubs $\Delta U_0$ von beispielsweise 0,5V und einem Laststrom $I_L$ von 20mA kann man bei einem Stützkondensator mit einer Kapazität C von 1000 μF nach der vorstehenden Gleichung (1) eine Lastpulsdauer $T_L$ von 25ms speisen, um danach jeweils eine Erholzeit $T_E$ von 3,5s verstreichen zu lassen. So ergibt sich ein Tastverhältnis von $\eta$ = 1/140.
Bei einer erfindungsgemäßen Wahl eines kleineren Spannungshubs $\Delta U$ von beispielsweise 40mV ergibt sich gemäß Gleichung (5) eine Lastpulsdauer $T_L$ von 2,1ms und mit einem Batterie-Innenwiderstand Ri von 500Ω gemäß Gleichung (5) eine Erholphase $T_E$ von 41,7ms. Das Tastverhältnis erhöht sich also auf ca. $\eta$ = 1/20, also um einen Faktor von ca. 7.
Durch diese Betriebsweise lässt sich z.B. in einer Stunde eine kumulierte Empfänger-Betriebszeit von 180s erzielen, während es bei der herkömmlichen Betriebsweise nur 26s wären. Dies entspricht einer deutlichen Annäherung an einen gewünschten Dauerempfang.
In einer bevorzugten Ausführungsform der Erfindung kann das Ende der Erholphase durch ein Kriterium vorgegeben sein, welches durch einen Prozessor in dem batteriebetriebenen Gerät feststellbar ist. Der Prozessor ist zur Überprüfung des Kriteriums und zum Beenden der Erholphase, insbesondere durch Schalten der Last bzw. anders ausgedrückt durch Erzeugen eines Lastpulses, eingerichtet. So kann die Schaltung das erfindungsgemäße Verfahren in besonders einfacher und zuverlässiger Art realisieren, ohne dass ein großer schaltungstechnischer Aufwand notwendig ist. Außerdem lassen sich die Kriterien so einfach anpassen bzw. ändern. Dies ermöglicht eine einfache Anpassung des erfindungsgemäßen Verfahrens an den jeweiligen Einsatzzweck.

Gemäß einer erfindungsgemäßen Ausführungsform kann das Kriterium für das Ende der Erholphase das Erreichen eines vorgegebenen Spannungswertes $U = U_{min} + \Delta U$ an dem Stützkondensator sein. In dieser Erfindungsvariante wird die Einhaltung des auslegungsgemäßen Spannungshubs $\Delta U$ also durch Überwachung der Spannung $U$ am Stützkondensator erreicht, wenn $U = U_{min} + \Delta U$ ist.

Nach dem ersten Einschalten des Empfängers kann in diesem Anwendungsfall der Empfänger erfindungsgemäß zunächst solange betrieben werden, bis an dem beim ersten Einschalten des Empfängers noch vollständig geladenen Stützkondensator, an welchen die Spannung $U_0$ anliegt, das Erreichen von der Grenzspannung $U_{min}$ (minimaler Spannungswert im Betrieb) festgestellt wird. Dann wird der Empfänger abgeschaltet und bleibt aus, bis sich die Spannung am Stützkondensator auf den Wert $U = U_{min} + \Delta U$ erholt hat. Danach wird der Empfänger wieder eingeschaltet (und damit die Erholphase beendet) und die Sequenz bzw. der Zyklus solange wiederholt, wie ein angenäherter Dauer-Empfangsbetrieb erforderlich oder gewünscht ist.

Die Überwachung der Spannung $U(t)$ am Stützkondensator kann erfindungsgemäß beispielsweise durch Komparatoren geschehen, die die Stützkondensator-Spannung mit der Spannung einer Referenzspannungsquelle vergleichen und entsprechende Schaltsignale aus dem Vergleich ableiten. Denkbar ist ebenfalls die Überwachung der Kondensatorspannung mit einem Analog-Digital-Wandler, wie er in vielen gängigen Low-Power- Mikrocomputer-Typen bereits eingebaut ist. Erfindungsgemäß bevorzugte Schaltungen hierfür werden später noch ausführlicher beschrieben.

Diese Erfindungsvariante ist insbesondere dann vorteilhaft, wenn ein möglichst großes Tastverhältnis erreicht werden soll. Durch die Spannungsüberwachung wird immer das optimale bzw. maximal mögliche Tastverhältnis erreicht. Da die Leerlaufspannung $U_0$ der Batterie im Lauf der Batterieentladung (Lebensdauer) abnimmt und der Innenwiderstand $R_i$ der Batterie im Lauf der Batterieentladung zunimmt, kann bei noch wenig entladener Batterie ein noch größeres Tastverhältnis erzielt werden als bei fast vollständig entladener Batterie, für die die Auslegung gemacht werden muss.

Die im oben genannten Zahlenbeispiele genannten Werte gelten für $U_0 = 3{,}0V$ und $R_i = 500\Omega$, was typische Werte einer fast entladenen Batterie sind. Typische Werte einer noch wenig entladenen Lithiumbatterie sind $U_0 = 3{,}4V$ und $R_i = 50\Omega$. Unabhängig vom Entladegrad der Batterie gilt $U_{min} = 2{,}5V$, was durch die Schaltung des Sensors bedingt ist, dessen minimale Betriebsspannung bei diesem Wert liegt. Für die kaum entladene Batterie ergeben sich also ein maximaler Spannungshub von $\Delta U_0 = 0{,}9V$ und damit bei unverändertem auslegungsgemäßem Spannungshub $\Delta U$ nach gemäß Gleichung (6) ein Tastverhältnis $\eta = 7{,}4 / 1$ (!).

Nach jedem Lastpuls der Dauer $T_L = 16{,}8ms$ muss die Erholphase nur $T_E = 2{,}3ms$ betragen, sodass also zu Beginn der Batterie-Lebensdauer pro Stunde rund 3170s Empfangsbetrieb möglich sind. Das verkürzt die Dauer der (Re-)Synchronisierung im Sensornetzwerk erheblich und nähert einen Dauerbetrieb der Last respektive Dauerempfang in dem vorliegenden Beispiel sehr gut an.

Das Tastverhältnis ergibt sich in dieser Ausführungsvariante also durch den Batterie-Entladegrad und wird nicht durch die Software in dem Prozessor des Sensors (bzw. allgemeiner des batteriebetriebenen Geräts) festgelegt, ist also nicht planbar. Das muss bei der erwähnten Anwendung des gepulsten Dauerempfangs zur (Re-)Synchronisation eines Sensornetzwerks kein Nachteil sein, wenn die Schaltung so dimensioniert wird, dass auch bei fast entladener Lithium-Batterie noch eine ausreichende Empfänger-Anzeit $T_L$ von mindestens 1ms gewährleistet ist, die ausreicht, um ein Bakensignal eines benachbarten Sensors während einer Synchronisierung (als einem erfindungsgemäß besonders bevorzugten Anwendungsfall) zu detektieren.

Außerdem kann der Prozessor des drahtlosen Sensors die sich jeweils gerade einstellenden Last- und Erholzeiten $T_L$ und $T_E$ messen, und so das Tastverhältnis $\eta$ bestimmen. Daraus kann er wiederum die aktuell notwendige Gesamt-Empfangszeit im gepulsten Empfangsbetrieb, d.h. die Dauer des angenäherten Dauerempfangs, einer anstehenden (Re-)Synchronisations-Phase ermitteln und anwenden.

In einer anderen Variante des erfindungsgemäßen Verfahren, die ggf. auch abwechselnd mit der vorbeschriebenen Variante betrieben werden kann, kann das Kriterium für das Ende der Erholphase eine vorgegebene Dauer $T_E$ der Erholphase (auch als Erholzeit bezeichnet) sein. In dieser Erfindungsvariante wird die Unplanbarkeit der sich aufgrund der batterieentladegradabhängig einstellenden Last- und Erholzeiten $T_L$ und $T_E$ und damit des Tastverhältnisses $\eta$ dadurch überwunden, dass nicht ein Spannungshub $\Delta U$ vorgegeben wird, sondern eine fest vorgegebene Erholzeit $T_E$. Die nachfolgende Lastphase wird dann beendet, sobald die Stützkondensatorspannung die Grenzspannung $U_{min}$ erreicht, sodass sich eine Lastdauer $T_L$ einstellt, die wiederum von der Leerlaufspannung $U_0$ und dem Innenwiderstand $R_i$ der Batterie, also von dem Entladegrad der Batterie, bevorzugt einer Lithium-Batterie, abhängig ist. In dieser Variante ist also die Erholzeit $T_E$ wählbar und die Schaltung muss so dimensioniert werden, dass auch bei fast entladener Batterie noch eine sinnvoll nutzbare Lastdauer $T_L$ ermöglicht wird.

Praktisch ist es jedoch oftmals sinnvoller, die Lastdauer $T_L$ fest vorgeben zu können. In dem beschriebenen bevorzugten Anwendungsfall kann beispielsweise die Lastdauer von 1ms vorgegeben werden, um dem Funkempfänger des Sensors eine sichere Detektion eines Bakensignals eines benachbarten Sensors in der (Re-)Synchronisationsphase eines Sensornetzwerks zu gewährleisten. Daher kann erfindungsgemäß als Kriterium für das Ende der Erholphase eine vorgegebene Dauer $T_L$ des Lastpulses (auch als Lastzeit oder Lastdauer) bezeichnet gewählt werden.

Um das zu erreichen kann in einer weiteren, vorteilhaften Erfindungsvariante zum Ermitteln eines zum Erreichen der vorgegebenen Lastpulsdauer ($T_L$) benötigten Spannungshubs $\Delta U$ die auch als Leerlaufspannung der Batterie bezeichnete Spannung $U_0$ des vollständig geladenen Stützkondensators bspw. vor Beginn einer initialen Lastphase nach einer nicht vor Erreichen einer vollständigen Ladung des Stützkondensators abgebrochenen Erholphase gemessen werden. Ferner kann die maximale Lastpulsdauer $T_0$ (welche gleich der initialen Lastpulsdauer ist) gemessen werden, während der der vollständig geladene Stützkondensator auf einen minimalen Spannungswert $U_{min}$ (im Sinne eines minimal zulässigen Spannungswerts, der ein zuverlässiges Betreiben der Last erlaubt und auch als Grenzspannung bezeichnet wird) entladen ist, gemessen werden. Es ist dann weiter vorgesehen, dass aus dem Verhältnis der vorgegebenen Lastpulsdauer $T_L$ zu der maximalen Lastpulsdauer $T_0$ der für das Erreichen der vorgegebenen Lastpulsdauer $T_L$ benötigte Spannungshub $\Delta U$ bestimmt wird.

Konkret kann gemäß einer bevorzugten Ausführungsform dieser Variante also vor Beginn der initialen Lastphase die Spannung U über dem Stützkondensators gemessen, die zu diesem Zeitpunkt nahe bei der Leerlaufspannung $U_0$ der Batterie liegt. Diese Spannungsmessung kann beispielsweise mit einem Analog-Digital-Wandler durchgeführt werden, der idealerweise schon im Prozessor, bspw. einem Mikrocomputer, des batteriebetriebenen Geräts integriert ist. Des Weiteren wird die Dauer $T_0$ der initialen Lastphase gemessen, was bspw. anhand einer Schwellwert getriggerten Zeitmessung vorzugsweise durch den Prozessor übernommen werden kann. Aus diesen beiden gemessenen, batterieentladegradabhängigen Größen und der vorgegebenen gewünschten Lastdauer $T_L$ kann jetzt ein sinnvoller benötigter Spannungshub $\Delta U$ für die regelmäßige Lastphase ermittelt werden. Dieser benötigte Spannungshub kann dann erfindungsgemäß für die nachfolgenden Zyklen aus Erholphase und Lastpuls (Lastphase) angewendet werden, d.h. die Erholphase wird während des gewünschten angenäherten Dauerbetriebs der Last beendet, wenn sich der Stützkondensator soweit aufgeladen hat, dass über dem Stützkondensator die Spannung $U = U_0 + \Delta U$ anliegt.

Der Einfachheit halber kann für die initiale Lastphase (Lastpuls) vereinfachend ein linearer Spannungsverlauf angenommen werden, sodass sich ein praktisch brauchbarer Spannungshub zu

$$\Delta U = \Delta U_0 \cdot C \cdot \frac{T_L}{T_0} \qquad (9)$$

ergibt. Da der reale Spannungsverlauf in der initialen Lastphase, d.h. während des ersten Lastpulses ausgehend von dem noch vollständig aufgeladenen Kondensator, einer flacher werdenden Exponentialfunktion folgt, ist sichergestellt, dass der so bestimmte Spannungshub $\Delta U$ immer groß genug ist, um in der folgenden Lastphase mindestens für die geplante Lastdauer $T_L$ oberhalb der Grenzspannung bzw. des minimalen Spannungswerts $U_{min}$ zu bleiben.

Praktisch entlädt sich der Stützkondensator also während der Dauer des Lastpulses $T_L$ (d.h. während der Lastphase) nie ganz bis zu der Grenzspannung $U_{min}$, so dass die Dauer $T_E$ der jeweils folgenden Erholphase ebenfalls entsprechend kürzer ausfällt, nämlich so lange, bis die Spannung am Kondensator wieder den Wert $U = U_{min} + \Delta U$ erreicht. Erfindungsgemäß kann die Erholphase also dann beendet werden, wenn die Spannung an dem Stützkondensator die Summe aus dem minimalen Spannungswert $U_{min}$ und dem benötigten Spannungshub $\Delta U$ erreicht hat.

Der minimale Spannungswert $U_{min}$ (Grenzspannung) kann bei der Herstellung des Geräts vorgegeben worden sein, bspw. als Grenzparameter in einer auf dem Prozessor des Geräts implementierten Software. Der maximale Spannungshub ergibt sich dann zu $\Delta U_0 = U_0 - U_{min}$.

Wie in den konkreten Beispielen bereits erläutert, ist es eine besonders bevorzugte Verfahrensvariante, wenn für den ersten Lastpuls eines Lastpulszyklus aus mehreren aufeinander folgenden Lastpulsen ein vollständig geladener Stützkondensator bis zu einem minimalen Spannungswert $U_{min}$, d.h. der Grenzspannung, entladen wird. Die sich anschließende Erholphase wird dann wie erfindungsgemäß beschrieben beendet, bevor der Stützkondensator aufgeladen ist, so dass sich der erfindungsgemäß beschriebene Zyklus aus vorzeitig abgebrochener Erholphase und nachfolgendem Lastpuls anschließt. Dies bietet die Möglichkeit, in dem ersten Lastpuls Messungen zum Entladegrad der Batterie und zur geeigneten Parametrieren des Kriteriums zum Abbrechen der Erholphase festzulegen. Da vor Beginn einer gewünschten Dauerlastphase, bspw. einem gewünschten Dauerempfang, meist ohnehin eine Betriebspause der Last vorliegt, kann der Stützkondensator während dieser Betriebspause ohne weitere Auswirkungen auf das batteriebetriebene Gerät in dem vordefinierten Sinne vollständig geladen werden, so dass nach einer solchen Betriebspause die volle Energie zur Verfügung steht.

Die vorliegende Erfindung ermöglicht es also, Batterien wie insbesondere Lithium-Langzeitbatterien mit parallel geschalteten Stützkondensatoren, in Betriebsphasen erhöhten Strombedarfs mit einem deutlich größeren Tastverhältnis von Ein- zu Aus-Zeiten zu betreiben als in bisherigen Worst-Case-Auslegungen. Durch die Messung der Spannung des Stützkondensators und den erfindungsgemäßen Wechsel von Lastpulsen und Erholphasen stellt sich unabhängig von den entladegradabhängigen Batterieparametern automatisch ein optimales Tastverhältnis ein.

In einer besonders bevorzugten Variante des erfindungsgemäßen Verfahrens, die vorstehend auch als Bespiel für die Erläuterung der erfindungswesentlichen Merkmale herangezogen wurde, kann als Last eine Sende- und/oder Empfangseinrichtung zur drahtlosen Kommunikation verwendet werden, deren gewünschte, ununterbrochene Betriebsdauer in einem Betriebsfall, bspw. einer Synchronisation von Teilnehmergeräten in einem Sensornetz zur drahtlosen Kommunikation, länger ist als eine maximale Lastpulsdauer $T_0$, die durch die in dem vollständig geladenen Stützkondensator gespeicherte Ladung und den Laststrom während des Lastpulses vorgegeben ist.

Der erfindungsgemäße Pulsbetrieb der Lastpulse ist besonders gut geeignet für den gepulsten Empfangsbetrieb von Sensoren in einem Sensornetzwerk, wie er in der (Re-)Synchronisationsphase des Netzwerks gefordert ist, das gewünscht einen (aufgrund der batteriebetriebenen Geräte nicht möglichen) Dauerbetrieb für eine optimal kurze Synchronisationszeit benötigen würde.

Dadurch, dass das Tastverhältnis gegenüber der herkömmlichen Worst-Case-Auslegung deutlich erhöht wird, ergeben sich betriebliche Vorteile, weil die (Re-) Synchronisation deutlich kürzer ausfällt und damit früher der Regelbetrieb des Sensornetzwerks aufgenommen werden kann. Außerdem kann entsprechend früher eine Rückmeldung über den Erfolg der (Re-)Synchronisation erfolgen. Die Dauer der (Re-)Synchronisation wird zu jedem Zeitpunkt der Lebensdauer der Batterie in dem Sensor so kurz, wie es die dem aktuellen Batterieentladegrad entsprechenden Batterieparameter zulassen. Das ist insbesondere deshalb vorteilhaft, weil gerade die erste Synchronisation des Sensornetzwerks typischerweise mit frischen Batterien in dem Sensor (batteriebetriebenen Gerät) erfolgt und hier nicht unnötig Zeit vergeudet wird, wie es bei einer Worst-Case-Auslegung unter Berücksichtigung stark entladener Batterien der Fall wäre.

Der genannte Vorteil gegenüber der Worst-Case-Auslegung wird noch dadurch verstärkt, dass bei den erfindungsgemäß bevorzugt eingesetzten Lithium-Langzeitbatterien der Innenwiderstand erst gegen Ende der Entladung stark ansteigt und die Leerlaufspannung stark absinkt. Beide Parameter haben bei diesem Batterietyp einen recht konstanten Verlauf während des größten Zeitanteils der Entladung. So wird bei der Worst-Case-Auslegung auf den letzten kurzen Teil der Batterie-Lebensdauer Rücksicht genommen. Dies ist bei der vorliegenden Erfindung nicht notwendig.

Die erfindungsgemäße Betriebsweise des zu einer Batterie in dem batteriebetriebenen Gerät parallel geschalteten Stützkondensators ist nicht auf den Betrieb eines Funkempfängers eines Sensors in einem Sensornetzwerk, insbesondere einem Kommunikationsnetzwerk zur Verbrauchskostenerfassung beschränkt, in dem sich die Vorteile des vorgeschlagenen Verfahren aber äußerst positiv bemerkbar machen. Diese Vorteile ergeben sich grundsätzlich für alle batteriebetriebenen Geräte, insbesondere mit Lithium-Langzeitbatterien als Batterie, die in bestimmten Betriebsphasen einen möglichst langen und zeitlich dichten Pulslastbetrieb erfordern.

Entsprechend betrifft die vorliegende Erfindung auch eine Schaltungsanordnung mit einer Batterie, insbesondere einer Lithium-Langzeitbatterie, als Energieversorgung, mit einem Stützkondensator, der in einem ersten Anschluss an den ersten Pol der Batterie und mit einen zweiten Anschluss an den zweiten Pol der Batterie angeschlossen ist, mit einer Last, die über einen Schalter in dem ersten Anschluss an den ersten Pol der Batterie und in dem zweiten Anschluss an den zweiten Pol der Batterie anschlossen ist, und mit einem Prozessor, insbesondere einem Mikrokontroller, der zum Schalten des Schalters eingerichtet ist, um die Last in einer Lastphase (d.h. während eines Lastpulses) anzuschalten, in welcher die Last die für den Laststrom während der Lastpulsdauer des Lastpulses benötigte Ladung aus dem Stützkondensator erhält, und in einer Erholphase auszuschalten, in der sich der Stützkondensator wieder auflädt. Der Prozessor ist erfindungsgemäß insbesondere durch Implementieren geeigneter Programmcode-Mittel zur Durchführung des vorbeschriebenen Verfahrens oder Teilen hiervon eingerichtet.

Eine besonders bevorzugte Schaltungsanordnung zur Ermittlung des Kriteriums, wann die Erholphase zur Ladung des Stützkondensators abgebrochen werden muss, kann vorsehen, dass der Prozessor eine Komparatorschaltung oder Analog-Digital-Wandlungsschaltung aufweist, welche im Lastfall die an der Last anliegende Spannung abgreift. Dazu sind insbesondere ein erster Anschluss der Komparatorschaltung oder Analog-Digital-Wandlungsschaltung mit dem ersten Anschluss des Stützkondensators und ein zweiter Anschluss der Komparatorschaltung oder Analog-Digital-Wandlungsschaltung mit dem zweiten Anschluss des Stützkondensators verbunden. Im Lastfall kann ein zwischen dem Stützkondesator und der Last vorhandener Schalter zum An- und Ausschalten der Last geschlossen sein, so dass die über dem Stützkondensator anliegende Spannung mit der über der Last anliegenden Spannung gleich ist. Sofern der Schalter geöffnet ist, d.h. im Leerlauf ohne Last, wird somit die über dem Stützkondensator anliegende Spannung gemessen.

Die Komparatorschaltung oder Analog-Digital-Wandlungsschaltung ist ferner mit mindestens einem Steuereingang des Prozessors verbunden, wobei der Prozessor dazu eingerichtet ist, aus dem an dem Steuereingang anliegenden Signal ein Kriterium für das an und Ausschalten der Last durch Schalten des Schalters abzuleiten. Die Komparatorschaltung und/oder die Analog-Digital-Wandlerschaltung können als separate Schaltungen außerhalb des Prozessors oder integriert in den Prozessor ausgebildet sein.

In Weiterentwicklung dieses Aspekts der erfindungsgemäßen Schaltungsanordnung kann die Komparatorschaltung einen Spannungsteiler mit einem ersten, zweiten und dritten Widerstand und einem ersten und einem zweiten Komparator aufweisen, wobei der erste Komparator zwischen dem ersten und dem zweiten Widerstand und der zweite Komparator zwischen dem zweiten und dem dritten Widerstand jeweils einen Spannungsabgriff für einen Komparatoreingang aufweisen und der jeweils andere Komparatoreingang des ersten und zweiten Komparators mit einer Referenzspannungsquelle verbunden ist. Die Referenzspannung kann bspw. mittels eines Spannungsteilers oder eines Spannungsstabilisieres als Referenzspannungsquelle aus der Batteriespannung abgleitet werden.

Gemäß einem weiteren, unabhängigen Aspekt dieser erfindungsgemäßen Ausführungsform kann mindestens einer der Widerstände durch den Mikroprozessor einstellbar sein, insbesondere der zweite Widerstand zwischen den Spannungsabgriffen für jeweils einen Komparatoreingang des ersten und des zweiten Komparators. Ggf. kann auch die Referenzspannungsquelle einstellbar sein. Erfindungsgemäß ist es besonders vorteilhaft, wenn die Einstellung von Widerstand bzw. Widerständen und Referenzspannungsquelle durch den Prozessor erfolgen kann. Hierdurch lassen sich die erfindungsgemäßen Kriterien auf einfach Weise zuverlässig einstellen.

Ein weiterer Aspekt der Komparatorschaltung kann vorsehen, dass der Spannungsangriff für den ersten Komparator an dessen ersten Komparatoreingang und der Spannungsabgriff für den zweiten Komparator an dessen zweiten Komparatoreingang angeschlossen ist, wobei der erste und der zweite Komparatoreingang jeweils eine unterschiedliche Polung (plus, minus) aufweisen. So lassen sich aus einer Referenzspannung und der Spannungsteilerschaltung mit drei Widerständen auf einfache Weise zwei unterschiedliche Schaltschwellen einstellen.

Dies ist mit der Analog-Digital-Wandlerschaltung auf einfache Weise auch realisierbar, weil die Analog-Digital-Wandlerschaltung jeweils einen der anliegenden Spannung entsprechenden Digitalwert liefert, der innerhalb des Prozessors mittels logischer Schaltschwellen abgearbeitet werden kann.

Vorzugsweise weist auch die Analog-Digital-Wanderschaltung einen Spannungsteiler aus mindestens zwei Widerständen mit einem Spannungsabgriff zwischen den zwei Widerständen auf.

Eine bevorzugte Verwendung der Komparatorschaltung bzw. der Analog-Digital-Wanderschaltung sieht vor, zwei Schaltschwellen zu erzeugen, welche dem minimalen Spannungswert $U_{min}$ und dem benötigten Spannungshub $\Delta U$ bzw. dem daraus abgeleiteten Spannungswert $U = U_{min} + \Delta U$ entsprechen. Auf diese Weise lässt sich ein bevorzugtes Kriterium für das Schalten der Last zwischen dem Lastpuls und der Erholphase besonders einfach und zuverlässig erreichen, ohne eine aufwendige Auswertungsschaltung vorsehen zu müssen.

Gemäß einer bevorzugten Ausgestaltung ist die Last ein Sender und/oder Empfänger (in der Kombination also ein Transceiver zum Senden und Empfangen) zur Teilnahme an einer Drahtloskommunikation.

Vorzugsweise kann die Schaltungsanordnung erfindungsgemäß in ein batteriebetriebenes Teilnehmergerät eines Drahtlos-Kommunikationsnetzwerks für das Aussenden und/oder Empfangen von Datentelegrammen integriert sein. Das Teilnehmergerät kann insbesondere ein Verbrauchserfassungsgerät, das die Verbrauchsdaten ermittelt und in dem Drahtlos-Kommunikationsnetzwerk aussendet, oder ein Datensammler sein, der von einem Verbrauchserfassungsgerät erfasste und ausgesendete Verbrauchsdaten über das Drahtlos-Kommunikationsnetzwerk empfängt und ggf. zur Weiterleitung wieder aussendet. Weitere Teilnehmer können beliebige Sensoren und/oder Aktoren sein, bspw. auch Rauch- oder Brandwarnmelder.

Eine erfindungsgemäß bevorzugte Verwendung des vorbeschriebenen Verfahrens oder der vorbeschriebenen Schaltungsanordnung bzw. Teilen hiervon liegt in der Erzeugung eines angenäherten Dauerbetriebs einer Last, wobei der Dauerbetrieb länger ist als eine maximale Lastpulsdauer $T_L$, die durch die in dem vollständig geladenen Stützkondensator gespeicherte Ladung und den Laststrom während des Lastpulses vorgegeben ist.

Erfindungsgemäß kann der angenäherte Dauerbetrieb einem gewünschten Dauerempfang eines als Last verwendeten Empfängers während einer Synchronisation bzw. Einbindung von Teilnehmergeräten in ein Drahtlos-Kommunikationsnetzwerk dienen, wie bespielhaft vorstehend bereits ausführlich beschrieben.

Weitere Merkmale, Vorteile und Anwendungsmöglichkeiten der vorstehenden Erfindung ergeben sich auch aus der nachfolgenden Beschreibung von Ausführungsbeispielen und der Zeichen. Dabei bilden alle beschriebenen und/oder bildlich dargestellten Merkmale den Gegenstand der vorliegenden Erfindung, auch unabhängig von ihrer Zusammenfassung in den Ansprüchen oder deren Rückbezügen.

Es zeigen:

Fig. 1 eine grundsätzlich bekannte Schaltungsanordnung mit einer Batterie, einem der Batterie parallel geschalteten Stützkondensator und einer Last;

Fig. 2 schematisch den Betriebsspannungsverlauf bei einem gepulsten Lastbetrieb gemäß einer Ausführungsform der vorliegenden Erfindung bei einer fast entladenen Batterie;

Fig. 3 schematisch den Betriebsspannungsverlauf bei einem gepulsten Lastbetrieb gemäß einer Ausführungsform der vorliegenden Erfindung bei einer frischen Batterie;

Fig. 4 ein Prinzipschaltbild einer Ausführungsform der erfindungsgemäßen Schaltanordnung mit einer Komparatorschaltung; und

Fig. 5 ein Prinzipschaltbild einer anderen Ausführungsform der erfindungsgemäßen Schaltanordnung mit einer Analog-Digital-Wandlungsschaltung.

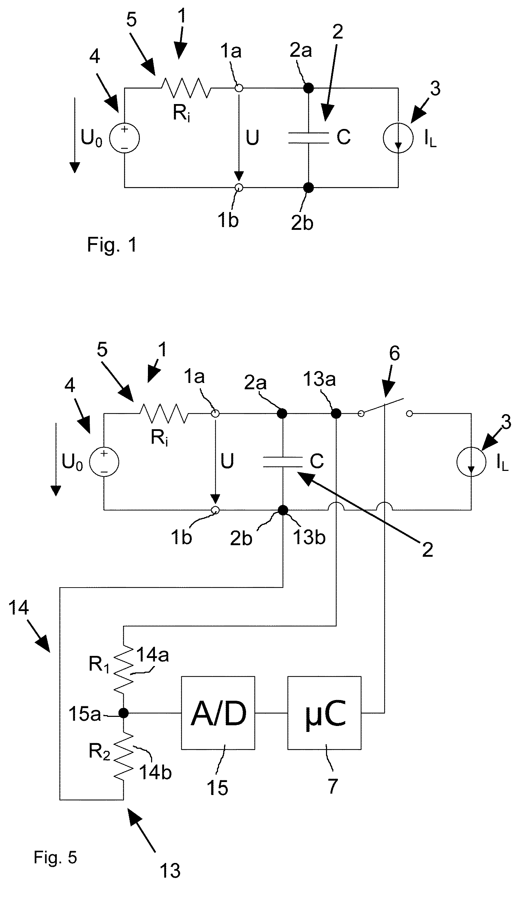

In Fig. 1 ist der grundsätzliche Schaltungsaufbau eines batteriebetriebenen Geräts mit einer Batterie 1 und einem Stützkondensator 2 dargestellt, wie er grundsätzlich bereits bekannt ist. Der Stützkondensator 2 ist der Batterie 1 parallel geschaltet. Dazu ist der Stützkondensator 2 mit einem ersten Anschluss 2a an einen ersten Klemmanschluss 1a der Batterie 1 und mit einem zweiten Anschluss 2b an einen zweiten Klemmanschluss 1b der Batterie 1 angeschlossen.

Zwischen dem ersten Anschluss 2a und dem zweiten Anschluss 2b des Stützkondensators 2 ist ein Last 3 angeschossen, die von der Parallelschaltung aus Batterie 1 und Stützkondensator 2 in einer Lastphase, d.h. wenn die Last 3 durch eine hier nicht dargestellte Schalteinrichtung eingeschaltet ist, mit Energie versorgt wird. In der Lastphase fließt durch die Last 3 der Laststrom $I_L$.

Die Batterie, die vorzugsweise als Lithiumbatterie ausgebildet sein kann, ist durch eine ideale Spannungsquelle 4 mit der Leerlaufspannung $U_0$ und den Innenwiderstand 5 mit dem Widerstandswert $R_i$ (nachfolgend auch verkürzt als Innenwiderstand bezeichnet) nachgebildet. $U_0$ und $R_i$ ändern ihre Werte im Lauf der Batterie-Entladung. Zwischen den Klemmanschlüssen 1a, 1b der Batterie 1 respektive zwischen den Anschlüssen 2a, 2b des Stützkondensators 2 kann die Spannung U in dem batteriebetrieben Gerät abgegriffen werden, die auch als Betriebsspannung oder Kondensatorspannung bezeichnet werden kann. Die Spannung U der Batterie (Betriebsspannung) liegt also auch am Stützkondensator 2 mit der Kapazität C (nachfolgend auch verkürzt als Stützkondensator C bezeichnet) und an der durch eine ideale Stromsenke nachgebildeten Last 3 der Schaltungsanordnung an.

Die Last 3 kann insbesondere ein Funksender und/oder -empfänger sein, der im Rahmen dieser Beschreibung insbesondere auch gleichbedeutend mit Last verwendet wird. Der Laststrom $I_L$ durch die Stromsenke (Last 3) wird in den Lastphasen eingeschaltet und in den Erholphasen ausgeschaltet. In dem Erholphasen ist der Laststrom also $I_L$ = 0. Leckströme des Stützkondensators 2 und während der Erholphase doch vorhandene, relativ geringe Lastströme $I_L$ werden hier in der Betrachtung vernachlässigt, weil sie in der Praxis einer solchen Anwendungsschaltung keine Rolle spielen.

Im Folgenden wird ein Ausführungsbeispiel eines drahtlosen bidirektionalen Sensors als batteriebetriebenes Gerät mit der erfindungsgemäßen Schaltungsanordnung beschrieben, der in einem synchronen Funk-Sensornetzwerk arbeiten soll. Während der Synchronisationsphase des Sensornetzwerks, in der Teilnehmergeräten des Sensorsetzwerks erstmals oder wieder die gleiche Zeitbasis gegeben wird, soll ein Funkempfänger 3 (Last) eines Teilnehmergeräts des Sensornetzwerks möglichst lange auf Empfang sein, um Bakensignale benachbarter Sensoren zu empfangen und sich mit ihnen zu synchronisieren.

Ein echter Dauerempfang ist in diesem Betriebsmodus allerdings nicht möglich, weil der Sensor aus einer Lithium-Langzeitbatterie 1 mit Energie versorgt wird. Also soll wenigstens ein gepulster Empfang mit abwechselnd möglichst langen Last- bzw. Empfangsphasen (Lastpulsen L) und möglichst kurzen Erholphasen E durchgeführt werden, um einen echten Dauerempfang möglichst gut anzunähern. Die Gesamtdauer dieses Betriebsmodus' verlängert sich entsprechend also mindestens um die Summendauer der nötigen Erholphasen E, sofern von einer fest Gesamtempfangsdauer ausgegangen werden kann.

Da der Funkempfänger 3, dessen Stromaufnahme $I_L$ in diesem Beispiel 20mA beträgt, nicht direkt aus der Lithiumbatterie 1 versorgt werden kann, ist parallel zur Batterie 1 ein Stützkondensator 2 mit einer Kapazität von C=1000$\mu$F geschaltet. Solche Stützkondensatoren 2 sind als Elektrolytkondensatoren mit einem ausreichend geringen Leckstrom deutlich unter 1$\mu$A verfügbar. Die Stromaufnahme der übrigen Sensorschaltung inklusive eines als Mikrocomputer bzw. -prozessor ausgebildeten (und in Fig. 1 nicht dargestellten) Prozessors zur Steuerung des batteriebetriebenen Geräts sei in dieser Betrachtung vernachlässigt, weil sie gering gegenüber der Stromaufnahme des Funkempfängers 3 ist. An der gesamten Schaltungsanordnung, insbesondere an der Last 3 (Funkempfänger) muss eine Betriebsspannung mit einem minimalen Spannungswert von mindestens $U_{min}$ = 2,5V anliegen (Grenzspannung), damit die Schaltungsanordnung, respektive die Last 3 und der Mikrocomputer, bestimmungsgemäß funktioniert. Diese Grenzspannung $U_{min}$ ist bekannt und bspw. als Parameter in der auf dem Prozessor implementierten Software und/oder als hardwaremäßig implementierter Schwellenwert in der Schaltungsanordnung vorgegeben.

Die Empfangsdauer $T_L$ (Dauer des Lastpulses) im gepulsten Empfangsbetrieb soll unter allen Betriebsbedingungen mindestens 2ms betragen, um ggf. empfangene Bakensignale sicher zu erkennen und in diesen evtl. enthaltene Synchronisations-Parameter entnehmen zu können. Die Lithiumbatterie 1 hat in diesem Beispiel nach Entnahme der nutzbaren Ladung, d.h. kurz vor dem Betriebsende der Batterie, noch eine Leerlaufspannung $U_0$ von 3,0V und einen Innenwiderstand $R_i$ von 500$\Omega$. Mit diesen Werten muss noch eine Lastdauer von $T_L$ = 2ms sichergestellt sein.

Dies kann im Prinzip mit der bekannten Schaltungsanordnung aus Fig. 1 erfolgen. Nach der oben entwickelten Gleichung (5) ergibt sich mit $\Delta U_0 = U_0 - U_{min}$ = 0,5V und einem passend gewählte benötigten Spannungshub $\Delta U$ = 0,04V sowie den weiter oben genannten Werten für den Innenwiderstand $R_i$, die Kapazität C und den Laststrom $I_L$ eine Lastdauer $T_L$ von mindestens $T_L$ = 2,1ms. Nach der oben stehenden Gleichung (4) ist bei gleichen Eingangsgrößen mit einer Dauer $T_E$ der Erholphase (E) von $T_E$ = 42ms zu rechnen.

Nach der oben stehenden Gleichung (6) ergibt sich also für das Ende der Batterieentladung, d.h. am Ende der Batterielebensdauer, für den gepulsten Empfangsbetrieb noch ein Tastverhältnis von $\eta$ = 1/20.

Dies ist in Fig. 2 dargestellt, die den zeitlichen Spannungsverlauf U(t) der Betriebsspannung U zwischen dem ersten und zweiten Anschluss 2a, 2b des Stützkondensators 2 für einen gepulsten Betrieb gemäß der vorliegenden Erfindung bei einer nahezu entladenen Batterie 1 wiedergibt.

Nach einer Pause im Empfangsbetrieb, d.h. einer langen, nicht vorzeitig abgebrochenen Erholungszeit, ist der Stützkondensator 2 vollständig aufgeladen. An dem Stützkondensator liegt anfangs die mit der Leerlaufspannung $U_0$ übereinstimmende Betriebsspannung U an. Bei Einschalten der Last 3, im Beispiel also dem Empfänger 3, entlädt sich der Stützkondensator 2 durch den durch die Last 3 verbrauchten Laststrom $I_L$. Dabei sinkt auch die zwischen den Anschlüssen 2a, 2b des Stützkondensators 2 anliegende Betriebsspannung U. Die Dauer $T_0$ dieses initialen Lastpulses wird durch das Erreichen der Grenzspannung bzw. des minimalen Spannungswerts $U_{min}$ bestimmt, bei der der initiale Lastpuls L durch Abschalten der Last 3 beendet wird.

In der sich anschließenden Erholphase E lädt sich der Stützkondensator 2 wieder auf. Die Ladekurve entsprechend Gleichung (2) ist für die ersten drei Erholphasen E als gestrichelte Linie dargestellt, deren theoretischer Verlauf auch über die erfindungsgemäß tatsächliche Dauer $T_E$ der Erholphase E hinaus dargestellt ist. Aufgrund der niedrigen Leerlaufspannung $U_0$ und des hohen Innenwiderstands $R_i$ der nahezu erschöpften Batterie 1 dauert es im Vergleich zu einer frischen Batterie 1 (vgl. auch Fig. 3) vergleichsweise lange, bis der Stützkondensator 2 soweit geladen ist, dass an diesem der für den nachfolgenden Lastpuls L notwendige Spannungshub $\Delta U$ durchlaufen ist, d.h. der Stützkondensator 2 für den nachfolgenden Lastpuls L ausreichend geladen ist. Daran schließt sich ein weiterer Lastpuls L mit der Lastpulsdauer $T_L$ an, bis an dem Stützkondensator 2 wieder die Spannung $U_{min}$ erreicht ist. Es folgen nun zyklisch Erholphasen E der Dauer $T_E$ und Lastpulse L der Lastpulsdauer $T_L$, bis der gepulste Dauerbetrieb eingestellt wird.

Im noch nicht entladenen, frischen Zustand hat eine Lithium-Batterie gemäß diesem Beispiel eine Leerlaufspannung $U_0$ von 3,4V und einen Innenwiderstand $R_i$ von 50Ω. Entsprechend des zuvor beschriebenen Rechenwegs ergeben sich demnach für eine frische Batterie analog eine Lastplusdauer $T_L$ = 17ms und eine Erholphase E der Dauer $T_E$ = 2,3ms. Daraus resultiert ein Tastverhältnis $\eta$ = 7,4/1.

Dies ist in Fig. 3 dargestellt, welche die gleiche Skalierung aufweist wie Fig. 2 und die sich entsprechend ergebenden Lastpulse L und Erholphasen E gegenüber stellt. Es ist deutlich zu erkennen, dass sich in diesem Fall das Verhältnis von Lastpulsdauer $T_L$ zu der Dauer $T_E$ der Erholphasen E zugunsten der Lastpulsdauer verschoben hat. In diesem Anwendungsfall, der über eine weite Zeit der Lebensdauer einer Langzeit-Lithiumbatterie 1 vorliegt, kann im Falle von Fig. 3 sogar tatsächlich von einen näherungsweisen Dauerempfang gesprochen werden.

Durch die gestrichten Kurven ist dagegen abzuschätzen, wie lange eine Erholphase E dauert, wenn sich der Stützkondensator 2 wieder vollständig auf die Spannung $U_0$ auflädt. Im Falle der nahezu entladenen Batterie gemäß Fig. 2 dauert eine vollständige Aufladung im Vergleich zu der Dauer $T_L$ eines Lastpulses L sehr lange, wie dem flachen Verlauf der gestrichten Spannungskurve während der Ladung entnommen werden kann.

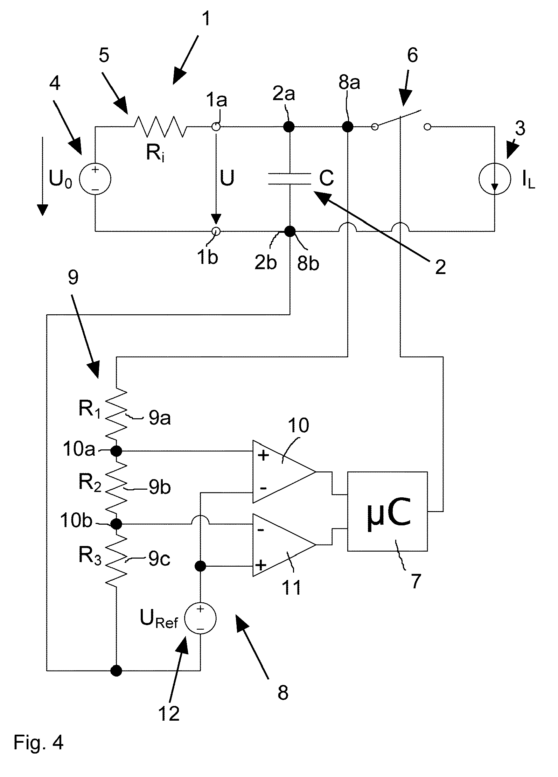

In dem in Fig. 4 gezeigten Ausführungsbeispiel ist in die Schaltungsanordnung gemäß Fig. 1 zwischen dem ersten Anschluss 2a des Stützkondensators 2 und der Last 3 als Schalteinrichtung ein Schalter 6 integriert, mit dem die Last 3 anund abgeschaltet werden kann. Der Schalter 6 ist durch einen als Mikrokontroller 7 ausgebildeten Prozessor bzw. Microcomputer schaltbar, der in dem batteriebetriebenen Gerät mit integriert ist. Ansonsten sind die bereits im Zusammenhang mit Fig. 1 beschriebenen Komponenten der Schaltung identisch, so dass dieselben Bezugszeichen verwendet werden und die entsprechende Beschreibung Bezug genommen wird.

Der Mikrokontroller 7 ist mittels einer Software zur Durchführung des erfindungsgemäßen Verfahrens eingerichtet. Dazu erzeugt der Mikrokontroller 7 ein Kriterium, welches das Ende der Erholphase E anzeigt und schaltet die Last 3 bei Erfüllen dieses Kriteriums an, indem er dann den Schalter 6 in dem Stromkreis schließt, so dass durch die Last 3 der Laststrom $I_L$ verbraucht wird.

Der Mikrokontroller 7 überwacht zur Ableitung der Kriterien für das Öffnen und Schließen des Schalters 6 die Betriebsspannung U des batteriebetrieben Geräts, d.h. konkret die an dem Stützkondensator 3 zwischen dem ersten und dem zweiten Anschluss 2a, 2b anliegende Spannung U, die je nach aktuellem Lade- bzw. Entladegrad des Stützkondensators, d.h. insbesondere während der Lastpulse L und der anschließenden Erholphase E während des Ladens des Stützkondensators 2 variiert.

Für das Ableiten des Kriteriums weist der Mikrokontroller 7 eine Komparatorschaltung 8 auf, mit der er über zwei Steuereingänge verbunden ist. In Fig. 4 ist die Komparatorschaltung 8 als von dem Mikrokontroller 7 verschiedener Schaltungsteil dargestellt. Grundsätzlich kann eine solche Komparatorschaltung 8 aber auch in den Mikrokontroller 7 integriert sein.

Die Komparatorschaltung 8 greift die Spannung zwischen einem ersten Spannungsabgriff 8a und einem zweiten Spannungsabgriff 8b ab. Der erste Spannungsabgriff 8a ist zwischen dem ersten Anschluss 2a des Stützkondensators 2 und dem Schalter 6 angeordnet. Der zweite Spannungsabgriff 8b findet in dem zweiten Anschluss 2b des Stützkondensators 2 statt. Damit wird die Betriebsspannung U als Spannung über dem Stützkondensator 2 bzw. der Last 3 ermittelt. Der erste und der zweite Spannungsabgriff 8a und 8b sind über einen Spannungsteiler 9 miteinander verbunden, der drei in Serie geschaltete Widerstände 9a, 9b, 9c mit den entsprechenden Widerstandswerten R1, R2, R3 aufweist.

Nachfolgend werden die Widerstandswerte auch verkürzt als Widerstände R1, R2, R3 bezeichnet. Ferner weist die Komparatorschaltung 8 zwei Komparatoren 10, 11 auf, deren jeweils ein Komparatorausgang mit einem Steuereingang des Mikrokotrollers 7 verbunden ist.

Jeder Komparator 10, 11 weist zwei Komparatoreingänge unterschiedlicher Polung auf, die in der Zeichnung mit "+" und "-" gekennzeichnet ist. Der Komparator vergleicht die an den Kompatatoreingängen anliegenden Spannungswerte und gibt das Vergleichsergebnis als digitales Signal über den Komparatorausgang aus. Jeweils einer der beiden Komparatoreingänge der beiden Komparatoren 10, 11 ist an eine in der Komparatorschaltung 8 vorgesehene Referenzspannungsquelle 12 angeschlossen, welche den Referenzspannungswert $U_{Ref}$ liefert. Der andere der beiden Komparatorausgänge des Komparators 10 ist an einen Spannungsabgriff 10a zwischen dem ersten Widerstand 9a und dem zweiten Widerstand 9b angeschlossen. Der andere der beiden Komparatorausgänge des Komparators 11 ist an einen Spannungsabgriff 10b zwischen dem zweiten Widerstand 9b und dem dritten Widerstand 9c angeschlossen.

Die Widerstandswerte R1, R2 und R3 und der Referenzspannungswert $U_{Ref}$ sind so eingestellt bzw. dimensioniert, dass bspw. der Komparator 10 den Anstieg der Spannung U auf den für den Lastpuls benötigten Spannungshub $\Delta U$, das heißt einen Spannungswert $U = U_{min} + \Delta U$, anzeigt und der Komparator 11 das Abfallen der Spannung U unter die Grenzspannung bzw. den minimalen Spannungswert $U_{min}$ anzeigt.

Die Widerstandswerte R1, R2 und R3 und der Referenzspannungswert $U_{Ref}$ können bei der Herstellung durch eine geeignete Dimensionierung und/oder Einstellung der entsprechenden elektronischen Bauteile eingestellt und fest vorgegeben werden. Es ist jedoch auch möglich, bspw. durch den Mikrokontroller 7 einstellbare elektronische Bauteile vorzusehen, so dass die Widerstandswerte R1, R2 und/oder R3 und/oder der Referenzspannungswert $U_{Ref}$ durch den Mikrokontroller bzw. eine auf dem Mikrokontroller implementierte Anwendung vorgebbar sind.

Die Funktionsweise der Schaltungsanordnung gemäß Fig. 4 wird nachfolgend mit Bezug auf das konkrete Anwendungsbeispiel näher erläutert. Die beiden Komparatoren 10, 11 signalisieren dem Mikrokontroller 7 jeweils, ob die Betriebsspannung U über oder unter dem minimalen Spannungswert $U_{min}$ bzw. über oder unter dem durch den benötigten Spannungshub $\Delta U$ vorgegebenen Spannungswert $U = U_{min} + \Delta U$ liegt. Daraus leitet der Mikrokontroller 7 ein Schaltsignal ab, mit dem er den Empfänger 3, hier durch die Stromsenke bzw. Last 3 dargestellt, ein- bzw. ausschaltet. Wenn der Betriebsmodus des gepulsten Empfangs ansteht, schaltet der Mikrokontroller 7 programmgesteuert zunächst den Empfänger 3 ein. Es beginnt die initiale Lastphase mit einem Lastpuls L der Dauer $T_0$. Sobald der entsprechende Komparator 11 signalisiert, dass die Betriebsspannung U den Grenzwert $U_{min}$ unterschreitet, schaltet der Mikrokontroller 7 aufgrund dieses Kriteriums den Empfänger 3 aus, womit die Erholphase E beginnt und die Betriebsspannung U durch Aufladung (Erholen) des Stützkondensators 2 wieder ansteigt.

Die Dauer $T_E$ der Erholphase E wird durch den benötigten Spannungshub $\Delta U$ bestimmt. Sobald die Betriebsspannung U den Wert $U_{min} + \Delta U$ überschreitet, signalisiert der entsprechende Komparator 10 dies dem Mikrokontroller 7 als Kriterium, woraufhin dieser den Empfänger 3 wieder einschaltet. Damit beginnt die nächste Lastphase, die andauert, bis die Betriebsspannung U wiederum die Grenzspannung $U_{min}$ unterschreitet. Das Unterschreiten der Grenzspannung $U_{min}$ gibt also die Dauer $T_L$ des Lastpulses L vor. Danach beginnt wieder eine Erholphase E der Dauer $T_E$, die wie vorbeschrieben beendet wird. Auf diese Weise wird der gepulste Empfangsbetrieb so lange fortgesetzt, wie dies in der Synchronisationsphase des Sensornetzwerks erforderlich ist.

Wenn beispielsweise während der Synchronisationsphase insgesamt 60 Minuten Dauerempfang erforderlich sind, dann kann der Mikrokontroller 7 die Dauer jeder einzelnen Lastpulse $T_{L,i}$ messen und die Lastphasendauern aufakkumulieren. Sobald die Summendauer $\sum_i T_{L,i}$ der Lastphasen $T_{L,i}$ den Grenzwert 60 Minuten erreicht, wird der gepulste Empfangsbetrieb beendet. Natürlich kann der gepulste Empfangsbetrieb aus anderen betrieblichen Gründen schon früher beendet werden, zum Beispiel wenn alle bekannten Nachbarsensoren bereits früher empfangen wurden.

In einer anderen Ausführungsführungsform kann die Messung der Betriebsspannung U des batteriebetriebenen Geräts über eine Analog-Digital-Wandlungsschaltung 13 erfolgen, die anstelle der Komparatorschaltung 8 gemäß Fig. 4 vorgesehen ist. Dies wird nachfolgend mit Bezug auf Fig. 5 beschrieben.

Ähnlich der Komparatorschaltung 8 sind auch in dieser Ausführungsform mit der Analog-Digital-Wandlungsschaltung 13 ein Schalter 6 und ein als Mikrokontroller 7 ausgebildeter Prozessor bzw. Mikrocomputer vorgesehen, die dieselben Aufgaben übernehmen wie in der Schaltungsanordnung gemäß Fig. 4. Insofern werden dieselben Bezugszeichen verwendet und es wird auf die dortige Beschreibung verwiesen.

Für das Ableiten des Kriteriums, ob die Erholphase und/der die der Lastpuls beendet werden soll, weist der Mikrokontroller 7 in dieser Ausführungsform die Analog-Digital-Wandlungsschaltung 13 auf, mit der er über einen Steuereingang verbunden ist. In Fig. 5 ist die Analog-Digital-Wandlungsschaltung 13 als von dem Mikrokontroller 7 verschiedener Schaltungsteil dargestellt. Grundsätzlich kann eine solche Analog-Digital-Wandlungsschaltung 13 aber auch in den Mikrokontroller 7 integriert sein.

Die Analog-Digital-Wandlungsschaltung 13 greift die Spannung, wie auch die Komparatorschaltung 8, zwischen einem ersten Spannungsabgriff 13a und einem zweiten Spannungsabgriff 13b ab. Der erste Spannungsabgriff 13a ist zwischen dem ersten Anschluss 2a des Stützkondensators 2 und dem Schalter 6 angeordnet. Der zweite Spannungsabgriff 13b findet in dem zweiten Anschluss 2b des Stützkondensators 2 statt. Damit wird die Spannung U als Betriebsspannung über dem Stützkondensator 2 bzw. der Last 3 ermittelt. Der erste und der zweite Spannungsabgriff 13a und 13b sind über einen Spannungsteiler 14 miteinander verbunden, der zwei in Serie geschaltete Widerstände 14a, 14b mit den entsprechenden Widerstandswerten R1, R2 aufweist. Ferner weist die Analog-Digital Wechselschaltung 13 einen Analog-Digital-Wandler 15 auf, dessen digitaler Ausgang mit einem Steuereingang des Mikrokotrollers 7 verbunden ist.

Am Eingang des Analog-Digital-Wandlers 15 liegt die durch den Spannungsteiler 14 geteilte, abgegriffene Spannung U des digitalen Geräts an. Diese wird über einen Spannungsabgriff 15a zwischen dem ersten Widerstand 14a und dem zweiten Widerstand 14b abgegriffen.

Der Analog-Digital-Wandler 15 wandelt die analog anliegende Betriebsspannung U in einen Digitalwert um, der von dem Mikrokontroller 7 direkt ausgewertet werden, um ein Kriterium für das Schalten des Schalters 6 abzuleiten.

Die Funktionsweise wird auch hier anhand des konkreten Beispiels erläutert. Für den gepulsten Empfangsbetrieb ist beispielhaft eine Lastpulsdauer $T_L$ von 2ms vorgegeben. Zu Beginn des vorgesehenen gepulsten Empfangs löst der Mikrokontroller 7 zunächst eine Messung der Betriebsspannung U aus, die jetzt nahe der Batterie-Leerlauf- bzw. Klemmspannung $U_0$ liegt. Bei einer frischen, d.h. noch kaum entladenen Batterie 1 liegt diese beispielsweise bei 3,4V. Anschließend schaltet der Mikrokontroller 7 den Empfänger 3 ein und beginnt die initiale Lastphase der Dauer $T_0$. Sobald die Betriebsspannung U(t) die Grenzspannung $U_{min}$ = 2,5V unterschreitet, schaltet der Mikrokontroller 7 den Empfänger 3 wieder aus und misst die seit dem Einschalten vergangene Zeit $T_0$. Diese sei in diesem Beispiel 115ms.

Nach der oben entwickelten Gleichung (9) bestimmt der Mikrocomputer jetzt den erforderlichen Spannungshub $\Delta U$, der sich in diesem Beispiel zu 16mV ergibt. Die anschließende Erholphase dauert also so lange, bis die Betriebsspannung U den Wert $U_{min}$ + $\Delta U$ = 2,516V überschreitet. Dann wird der Empfänger 3 für einen Lastpuls L der Dauer $T_L$ = 2ms wieder eingeschaltet. Im gepulsten Empfangsbetrieb wechseln sich dann Erholphasen E, in denen die Betriebsspannung auf U = $U_{min}$ + $\Delta U$ = 2,5V steigt, mit Lastpulsen L der Dauer $T_L$ = 2ms ab. Dies wird so lange fortgesetzt, wie dies in der Synchronisationsphase des Sensornetzwerks erforderlich ist.

Bei fast entladener Lithium-Batterie 1 wird in der initialen Lastphase der Dauer $T_0$ beispielsweise eine Batterie-Leerlaufspannung von $U_0$ = 3,0V und eine initiale Lastdauer von $T_0$ = 25,6ms gemessen. In diesem Zustand bestimmt der Mikrokontroller passend zur geforderten Lastdauer $T_L$ von 2ms nach Gleichung (9) den jetzt erforderlichen Spannungshub $\Delta U$ von 39mV, der zu der Spannungsschwelle U = $U_{min}$ + $\Delta U$ = 2,539V führt, die während der Erholphasen des gepulsten Empfangsbetrieb erreicht werden muss.

Die vorliegende Erfindung erreicht gegenüber einer Betriebsweise, bei der der Stützkondensator 2 zwischen zwei Lastpulsen I jeweils wieder vollständig geladen wird, also ein wesentlich besseres Tastverhältnis, das einem gewünschten Dauerbetrieb deutlich näher kommt. Dadurch lassen sich bspw. Synchronisationsphasen in einem Sensornetzwerk erheblich verkürzen.

**Bezugszeichenliste:**

1       Batterie
1a      erster Klemmanschluss der Batterie
1b      zweiter Klemmanschluss der Batterie
2       Stützkondensator
2a      erster Anschluss des Stützkondensators
2b      zweiter Anschluss des Stützkondensators
3       Last
4       ideale Spannungsquelle
5       Innenwiderstand
6       Schalter
7       Prozessor; Mikrocontroller
8       Komparatorschaltung
8a      erster Spannungsabgriff der Komparatorschaltung
8b      zweiter Spannungsabgriff der Komparatorschaltung
9       Spannungsteiler
9a      erster Widerstand
9b      zweiter Widerstand
9c      dritter Widerstand
10      Komparator

| | |
|---|---|
| 10a | Spannungsabgriff des Komparators |
| 11 | Komparator |
| 11a | Spannungsabgriff des Komparators |
| 12 | Referenzspannungsquelle |
| 13 | Analog-Digital Wandlungsschaltung |
| 13a | erster Spannungsabgriff der Analog-Digital Wandlungsschaltung |
| 13b | zweiter Spannungsabgriff der Analog-Digital Wandlungsschaltung |
| 14 | Spannungsteiler |
| 14a | erster Widerstand |
| 14b | zweiter Widerstand |
| 15 | Analog-Digital-Wandler |
| 15a | Spannungsabgriff des Analog-Digital-Wandlers |

| | |
|---|---|
| $I_L$ | Laststrom |
| $U_0$ | Leerlaufspannung der Batterie |
| $U$ | Spannung, Betriebsspannung des batteriebetriebenen Geräts |
| $U(t)$ | zeitlicher Verlauf der Spannung U als Funktion der Zeit |
| $U_{min}$ | Grenzspannung, minimaler Spannungswert |
| $U_{Ref}$ | Referenzspannungswert |
| $R_i$ | Widerstandswert des Innenwiderstands |
| $T_0$ | Dauer der initialen Lastphase bzw. des initialen Lastpulses |
| $T_L$ | Dauer des Lastpulses bzw. der Lastphase, Last(puls)dauer |
| $L$ | Lastpuls |
| $T_E$ | Dauer der Erholphase, Erholphase (Erholzeit), |
| $E$ | Erholphase |
| $\Delta U_0$ | maximaler Spannungshub |
| $\Delta U$ | benötigter Spannungshub |
| $\eta$ | Tastverhältnis |

## Patentansprüche

1. Verfahren zum Betreiben eines batteriebetriebenen Geräts, bei dem der Batterie (1) ein Stützkondensator (2) parallelgeschaltet ist und mit dem eine Last (3) gepulst betrieben wird, wobei die Last (3) die für den Laststrom ($I_L$) während der Dauer ($T_L$) des Lastpulses (L) benötigte Ladung aus dem Stützkondensator (2) erhält, der sich während des Lastpulses (L) entsprechend entlädt und in einer sich an den Lastpuls anschließenden Erholphase (E) der Dauer ($T_E$) wieder auflädt, wobei die Erholphase (E) beendet wird, bevor der Stützkondensator (2) vollständig aufgeladen ist, indem ein weiterer Lastpuls (L) folgt, welcher die Erholphase (E) beendet, wobei dieser Vorgang für eine Anzahl von Zyklen aus Lastpuls und Erholphase fortgeführt wird, bis durch das batteriebetriebene Gerät eine Betriebspause im Betreiben der Last mit Lastpulsen gemacht wird, **dadurch gekennzeichnet, dass** das Ende der Erholphase (E) durch das durch einen Prozessor (7) in dem batteriebetriebenen Gerät feststellbare Kriterium vorgegeben ist, dass ein vorgegebener Spannungswert (U) an dem Stützkondensator (2) oder eine vorgegebene Dauer ($T_E$) der Erholphase (E) erreicht ist, wobei Prozessor (7) zur Überprüfung des Kriteriums und zum Beenden der Erholphase (E) eingerichtet ist.

2. Verfahren nach Anspruch 1, **dadurch gekennzeichnet, dass** für den ersten Lastpuls (L) eines Lastpulszyklus aus mehreren aufeinander folgenden Lastpulsen (L) ein vollständig geladener Stützkondensator (2) bis zu einem minimalen Spannungswert ($U_{min}$) entladen wird.

3. Verfahren nach einem der vorhergehenden Ansprüche, **dadurch gekennzeichnet, dass** als Last (3) eine Sende- und/oder Empfangseinrichtung zur drahtlosen Kommunikation verwendet wird, deren gewünschte, ununterbrochene Betriebsdauer in einem Betriebsfall länger ist als eine maximale Lastpulsdauer ($T_0$), die durch die in dem vollständig geladenen Stützkondensator (2) gespeicherte Ladung und den Laststrom ($I_L$) vorgegeben ist.

4. Schaltungsanordnung mit einer Batterie (1) als Energieversorgung, mit einem Stützkondensator (2), der in einem ersten Anschluss (2a) an den ersten Klemmanschluss (1a) der Batterie (1) und mit einen zweiten Anschluss (2b) an den zweiten Klemmanschluss (1 b) der Batterie angeschlossen ist, mit einer Last (3), die über einen Schalter (6) an den ersten Anschluss (2a) des Stützkondensators (2) und an den zweiten Anschluss (2b) des Stützkondensators (2) anschlossen ist, und mit einem Prozessor (7), der zum Schalten des Schalters (6) eingerichtet ist, um die Last (3) in einer Lastphase anzuschalten, in welcher die Last (3) die für den Laststrom ($I_L$) während der Dauer ($T_L$) des Lastpulses (L) benötigte Ladung aus dem Stützkondensator (2) erhält, und in einer Erholphase (E) auszuschalten, in der sich der Stützkondensator (2) wieder auflädt, **dadurch gekennzeichnet, dass** der Prozessor (7) zur Durchführung des Verfahrens nach einem der Ansprüche 1 bis 3 eingerichtet ist.

**5.** Schaltungsanordnung nach Anspruch 4, **dadurch gekennzeichnet, dass** der Prozessor (7) eine Komparatorschaltung (8) oder Analog-Digital-Wandlungsschaltung (13) aufweist, welche die an dem Stützkondensator (2) und/oder an der Last (3) anliegende Spannung (U(t)) abgreift und mit mindestens einem Steuereingang des Prozessors (7) verbunden ist, wobei der Prozessor (7) dazu eingerichtet ist, aus dem an dem Steuereingang anliegenden Signal ein Kriterium für das an und Ausschalten der Last (3) durch Schalten des Schalters (6) abzuleiten.

**6.** Schaltungsanordnung nach Anspruch 5, **dadurch gekennzeichnet, dass** die Komparatorschaltung (8) einen Spannungsteiler (9) mit einem ersten, zweiten und dritten Widerstand (9a, 9b, 9c) und einem ersten und einem zweiten Komparator (10, 11) aufweist, wobei der erste Komparator (10) zwischen dem ersten und dem zweiten Widerstand (9a, 9b) und der zweite Komparator (11) zwischen dem zweiten und dem dritten Widerstand (9b, 9c) einen Spannungsabgriff (10a, 11 a) für einen Komparatoreingang aufweisen und der jeweils andere Komparatoreingang des ersten und zweiten Komparators mit einer Referenzspannungsquelle (12) verbunden ist.

**7.** Schaltungsanordnung nach einem der Ansprüche 4 bis 6, **dadurch gekennzeichnet, dass** die Last (3) ein Sender und/oder Empfänger zur Teilnahme an einer Drahtloskommunikation ist.

**8.** Schaltungsanordnung nach einem der Ansprüche 4 bis 7, **dadurch gekennzeichnet, dass** die Schaltungsanordnung in ein batteriebetriebenes Teilnehmergerät eines Drahtlos-Kommunikationsnetzwerks für das Aussenden und/oder Empfangen von Datentelegrammen integriert ist.

**9.** Verwendung eines Verfahrens nach den Ansprüchen 1 bis 3 oder einer Schaltungsanordnung nach den Ansprüche 4 bis 8 zur Erzeugung eines angenäherten Dauerbetriebs einer Last, der länger ist als eine maximale Lastpulsdauer ($T_0$), die durch die in dem vollständig geladenen Stützkondensator (2) gespeicherte Ladung und den Laststrom ($I_L$) vorgegeben ist.

**10.** Verwendung nach Anspruch 9, **dadurch gekennzeichnet, dass** der angenäherte Dauerbetrieb einem gewünschten Dauerempfang eines als Last (3) verwendeten Empfängers während einer Synchronisation von Teilnehmergeräten in ein Drahtlos-Kommunikationsnetzwerk dient.

**Claims**

**1.** Method for operating a battery-powered device, in which a backup capacitor (2) is connected in parallel with the battery (1) and with which a load (3) is operated in pulsed mode, wherein the load (3) obtains the charge required for the load current ($I_L$) for the duration ($T_L$) of the load pulse (L) from the backup capacitor (2), which accordingly discharges during the load pulse (L) and then recharges in a load recovery phase (E) of duration ($T_E$) directly following the load pulse, wherein the recovery phase (E) is terminated before the backup capacitor (2) is fully charged, by another following load pulse (L) which terminates the recovery phase (E), wherein this process is continued for a number of cycles consisting of load pulse and recovery phase until the battery-powered device initiates an operating pause in the operation of the load with load pulses, **characterized in that** the end of the recovery phase (E) is specified by the criterion, which can be established by a processor (7) in the battery-powered device, that a specified voltage value (U) on the backup capacitor (2) or a specified duration ($T_E$) of the recovery (E) is reached, wherein processor (7) is set configured for testing the criterion and terminating the recovery phase (E).

**2.** Method according to Claim 1, **characterized in that** for the first load pulse (L) of a load pulse cycle consisting of a plurality of successive load pulses (L), a fully charged backup capacitor (2) is discharged to a minimum voltage value ($U_{min}$).

**3.** Method according to any one of the previous claims, **characterized in that** a sending and/or receiving device for wireless communication is used as the load (3), the desired continuous operating period of which in an operational case is longer than a maximum load pulse duration ($T_0$), which is specified by the charge stored in the fully charged backup capacitor (2) and the load current ($I_L$).

4. Circuit arrangement with a battery (1) as a power supply, having a back-up capacitor (2), which in a first connection (2a) is connected to the first terminal connection (1a) of the battery (1) and with a second connection (2b) to the second terminal connection (1b) of the battery, having a load (3) which is connected via a switch (6) to the first connection (2a) of the backup capacitor (2) and to the second connection (2b) of the backup capacitor (2), and having a processor (7) which is set up for switching the switch (6), in order to switch on the load (3) in a load phase in which the load (3) obtains the charge required for the load current ($I_L$) for the duration ($T_L$) of the load pulse (L) from the backup capacitor (2), and to switch off said load in a recovery phase (E) in which the backup capacitor (2) recharges, **characterized in that** the processor (7) is configured for carrying out the method according to any one of Claims 1 to 3.

5. Circuit arrangement according to Claim 4, **characterized in that** the processor (7) comprises a comparator circuit (8) or analogue-digital conversion circuit (13), which taps off the voltage (U(t)) present on the backup capacitor (2) and/or on the load (3) and is connected to at least one control input of the processor (7), wherein the processor (7) is set up to derive from the signal present at the control input a criterion for switching the load (3) on and off by switching the switch (6).

6. Circuit arrangement according to Claim 5, **characterized in that** the comparator circuit (8) comprises a voltage divider (9) with a first, second and third resistor (9a, 9b, 9c) and a first and a second comparator (10, 11), wherein between the first and the second resistor (9a, 9b) and between the second and the third resistor (9b, 9c), the first comparator (10) and the second comparator (11) respectively have a voltage tap (10a, 11a) for a comparator input and the respective other comparator input of the first and second comparator is connected to a reference voltage source (12).

7. Circuit arrangement according to any one of Claims 4 to 6, **characterized in that** the load (3) is a transmitter and/or receiver for participating in a wireless communication.

8. Circuit arrangement according to any one of Claims 4 to 7, **characterized in that** the circuit arrangement is integrated in a battery-powered subscriber device of a wireless communication network for sending and/or receiving data telegrams.

9. Use of a method according to Claims 1 to 3 or of a circuit arrangement according to Claims 4 to 8, for generating an approximated continuous operation of a load that is longer than a maximum load pulse duration ($T_0$), which is specified by the charge stored in the fully charged backup capacitor (2) and by the load current ($I_L$).

10. Use according to Claim 9, **characterized in that** the approximated continuous operation is used for a desired continuous reception of a receiver used as a load (3) during a synchronization of subscriber devices into a wireless communication network.

**Revendications**

1. Procédé de fonctionnement d'un appareil alimenté par batterie, dans lequel la batterie (1) est branchée en parallèle à un condensateur auxiliaire (2) et fonctionne par impulsions avec une charge (3), dans lequel la charge (3) obtient la charge nécessaire pour le courant de charge ($I_L$) pendant la durée ($T_L$) de l'impulsion de charge (L) à partir du condensateur auxiliaire (2), qui se décharge de manière correspondante pendant l'impulsion de charge (L) et se recharge de la durée ($T_E$) dans une phase de repos (E) consécutive à l'impulsion de charge, dans lequel la phase de repos (E) est terminée, avant que le condensateur auxiliaire (2) soit totalement rechargé, du fait qu'une impulsion de charge supplémentaire (L) suit, qui termine la phase de repos (E), dans lequel ce processus est poursuivi pour une pluralité de cycles d'impulsion de charge et phase de repos, jusqu'à l'appareil alimenté par batterie fasse une pause de fonctionnement lors du fonctionnement de charge avec des impulsions de charge, **caractérisé en ce que** la fin de la phase de repos (E) est prescrite par le critère déterminé par un processeur (7) dans l'appareil alimenté par batterie, **en ce que** une valeur de tension prescrite (U) est atteinte sur le condensateur auxiliaire (2) ou une durée prescrite ($T_E$) de la phase de repos (E) est atteinte, dans lequel un processeur (7) est conçu pour contrôler le critère et mettre fin à la phase de repos (E).

2. Procédé selon la revendication 1, **caractérisé en ce que** pour la première impulsion de charge (L) d'un cycle d'impulsions de charge composé de plusieurs impulsions de charge (L) se succédant, un condensateur auxiliaire (2) complètement chargé est déchargé jusqu'à une valeur de tension minimale ($U_{min}$).

**3.** Procédé selon une des revendications précédentes, **caractérisé en ce que** comme charge (3) un dispositif d'émission et/ou réception pour communication sans fil est utilisé, dont la durée de fonctionnement souhaitée, ininterrompue est plus longue dans un cas de fonctionnement qu'une durée d'impulsion de charge maximale ($T_0$), qui est prescrite par le courant de charge ($I_L$) et la charge accumulée dans le condensateur auxiliaire (2) totalement chargé.

**4.** Dispositif de circuit comportant une batterie (1) comme alimentation en énergie électrique, comportant un condensateur auxiliaire (2), qui est raccordé dans un premier raccord (2a) à la première borne (1a) de la batterie (1) et à un deuxième raccord (2b) sur la deuxième borne (1b) de la batterie, comportant une charge (3), qui est raccordée par l'intermédiaire d'un commutateur (6) au premier raccord (2a) du condensateur auxiliaire (2) et au deuxième raccord (2b) du condensateur auxiliaire (2), et comportant un processeur (7), qui est conçu pour commuter le commutateur (6), afin d'activer la charge (3) dans une phase de charge, dans laquelle la charge (3) obtient la charge nécessaire pour le courant de charge ($I_L$) pendant la durée ($T_L$) de l'impulsion de charge (L) à partir du condensateur auxiliaire (2), et désactiver dans une phase de repos (E), dans laquelle le condensateur auxiliaire (2) se recharge, **caractérisé en ce que** le processeur (7) est conçu pour mettre en oeuvre le procédé selon une des revendications 1 à 3.

**5.** Dispositif de circuit selon la revendication 4, **caractérisé en ce que** le processeur (7) présente un circuit de comparateur (8) ou un circuit de conversion analogique-numérique, qui prélève une tension ($U(t)$) présente sur le condensateur auxiliaire (2) et/ou sur la charge (3) et est relié avec au moins une entrée de commande du processeur (7), dans lequel le processeur (7) est conçu afin de déduire du signal présent au niveau de l'entrée de commande un critère pour l'activation et la désactivation de la charge (3) en commutant le commutateur (6).

**6.** Dispositif de circuit selon la revendication 5, **caractérisé en ce que** le circuit de comparateur (8) présente un diviseur de tension (9) avec une première, deuxième et troisième résistance (9a, 9b, 9c) et un premier et un deuxième comparateur (10, 11), dans lequel le premier comparateur (10) présente entre la première et la deuxième résistance (9a, 9b) et le deuxième comparateur (11) présente entre la deuxième et la troisième résistance (9b, 9c) un prélèvement de tension (10a, 11a) pour une entrée de comparateur et l'autre entrée de comparateur respective du premier et deuxième comparateur est reliée avec une source de tension de référence (12).

**7.** Dispositif de circuit selon une des revendications 4 à 6, **caractérisé en ce que** la charge (3) est un émetteur et/ou récepteur pour participer à une communication sans fil.

**8.** Dispositif de circuit selon une des revendications 4 à 7, **caractérisé en ce que** le dispositif de circuit est intégré dans un appareil participant alimenté par batterie d'un réseau de communication sans fil pour l'émission/réception de télégrammes de données.

**9.** Utilisation d'un procédé selon les revendications 1 à 3 ou d'un dispositif de circuit selon les revendications 4 à 8 pour générer un fonctionnement approximativement durable d'une charge, qui est plus longue qu'une durée d'impulsion de charge maximale ($T_0$), qui est prescrit par le courant de charge ($I_L$) et par la charge accumulée dans le condensateur auxiliaire (2) totalement chargé.

**10.** Utilisation selon la revendication 9, **caractérisée en ce que** le fonctionnement approximativement durable sert à une réception approximativement durable souhaitée d'un récepteur utilisé comme charge (3) pendant une synchronisation des appareils participant dans un réseau de communication sans fil.

Fig. 1

Fig. 5

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005013638 C5
- US 20070259629 A1
- US 20060264188 A1
- US 6882130 B2
- DE 102010022774 A1
- DE 19911657 C2
- EP 1860830 B1
- US 2011204855 A1
- WO 2011131241 A1